# EUROPÄISCHE PATENTSCHRIFT

(11) **EP 3 488 967 B1**
(45) Veröffentlichungstag und Bekanntmachung des Hinweises auf die Patenterteilung: **17.06.2020**
(21) Anmeldenummer: 18000864.1
(22) Anmeldetag: 02.11.2018
(51) Int. Cl.: B24B 13/06, B24B 49/12, B23Q 15/28, B23Q 17/24

(54) **VORRICHTUNG ZUR BEARBEITUNG VON OPTISCHEN WERKSTÜCKEN, INSBESONDERE BRILLENGLÄSERN**
DEVICE FOR PROCESSING OPTICAL WORKPIECES, IN PARTICULAR SPECTACLE LENSES
DISPOSITIF D'USINAGE DE PIÈCES À USINER OPTIQUES, EN PARTICULIER VERRES DE LUNETTES

(30) Priorität: 08.11.2017 DE 102017010322
(43) Veröffentlichungstag der Anmeldung: 29.05.2019
(73) Patentinhaber: Satisloh AG, 6340 Baar (CH)
(72) Erfinder: Bernhardt, Viktor, D-35619 Braunfels (DE); Hanisch, Frank, D-35625 Hüttenberg (DE); Mokrow, Torsten, D-35452 Heuchelheim (DE); Pavel, Stephanie, D-35625 Hüttenberg (DE); Schäfer, Holger, D-35789 Weilmünster (DE); Wallendorf, Steffen, D-35582 Wetzlar - Dutenhofen (DE)
(74) Vertreter: Oppermann, Mark

(56) Entgegenhaltungen:
- EP-A2- 1 477 274
- EP-A2- 2 363 238
- DE-A1-102014 015 053
- DE-A1-102017 003 014
- DE-U1-202015 007 074

## Beschreibung

### TECHNISCHES GEBIET

Die vorliegende Erfindung bezieht sich allgemein auf eine Vorrichtung zur Bearbeitung von optischen Werkstücken. Insbesondere bezieht sich die Erfindung auf eine Vorrichtung zur Feinbearbeitung der optisch wirksamen Flächen an Brillengläsern, wie sie in sogenannten "RX-Werkstätten", d.h. Produktionsstätten zur Fertigung von individuellen Brillengläsern nach Rezept, oder bei der Fertigung von konventionellen Brillengläsern, wie z.B. Gläsern für Sonnenbrillen, in großem Umfang zum Einsatz kommen.

### STAND DER TECHNIK

Die spanende Bearbeitung der optisch wirksamen Flächen von Brillengläsern kann grob in zwei Bearbeitungsphasen unterteilt werden, nämlich zunächst die Vorbearbeitung der optisch wirksamen Flächen zur Erzeugung der rezeptgemäßen Makrogeometrie und sodann die Feinbearbeitung der optisch wirksamen Flächen, um Vorbearbeitungsspuren zu beseitigen und die gewünschte Mikrogeometrie zu erhalten. Während die Vorbearbeitung der optisch wirksamen Flächen von Brillengläsern u.a. in Abhängigkeit vom Material der Brillengläser durch Schleifen, Fräsen und/oder Drehen erfolgt, werden die optisch wirksamen Flächen von Brillengläsern bei der Feinbearbeitung üblicherweise einem Feinschleif-, Läpp- und/oder Poliervorgang unterzogen, wozu man sich einer entsprechenden Maschine bedient. Insofern soll im Sprachgebrauch der vorliegenden Anmeldung der Begriff "Polieren", auch in Wortzusammensetzungen wie z.B. "Polierwerkzeug" od.dgl., Feinschleif- und Läppvorgänge mit umfassen, in dem Beispiel also Feinschleif- oder Läppwerkzeuge.

Eine Poliermaschine mit mindestens einer Vorrichtung zur Feinbearbeitung von optisch wirksamen Flächen an insbesondere Brillengläsern als Werkstücken ist beispielsweise aus der Druckschrift DE 10 2014 015 053 A1 bekannt. Diese weist eine in einen Arbeitsraum hineinragende Werkstückspindel auf, über die ein zu polierendes Werkstück um eine Werkstück-Drehachse C drehend angetrieben werden kann. Ferner sind zwei der Werkstückspindel zugeordnete und gegenüberliegend in den Arbeitsraum hineinragende Werkzeugspindeln vorgesehen, an denen jeweils ein Polierwerkzeug um eine Werkzeug-Drehachse A, A' drehend angetrieben werden kann und entlang der Werkzeug-Drehachse A, A' axial zustellbar (Zustellachsen Z, Z') gehalten ist. Die Werkzeugspindeln können weiterhin relativ zur Werkstückspindel gemeinsam entlang einer im Wesentlichen senkrecht zu der Werkstück-Drehachse C verlaufenden Linearachse X bewegt und um verschiedene Schwenk-Stellachsen B, B' verschwenkt werden, die im Wesentlichen senkrecht zu der Werkstück-Drehachse C und im Wesentlichen senkrecht zu der Linearachse X verlaufen. In besonders kompakter Bauweise sind bei diesem Stand der Technik die Werkzeugspindeln in Richtung der Linearachse X gesehen hintereinander angeordnet.

Aufgrund der bei diesem Stand der Technik getroffenen Achskonstellation (A, A', B, B', C, X, Z, Z') können konventionelle Polierprozesse sowohl (1.) mit einer sogenannten "Tangential-Polierkinematik", bei der die mit den Werkzeugspindeln axial zugestellten (Z, Z') Polierwerkzeuge unter einem voreingestellten aber festen Schwenkwinkel (B, B') der Werkzeugspindeln oszillierend mit relativ kleinen Hüben quer (X) über das jeweilige Brillenglas bewegt werden, als auch (2.) mit einer Polierkinematik, bei der die zugestellten (Z, Z') Polierwerkzeuge während ihrer oszillierenden Querbewegung (X) zugleich kontinuierlich verschwenken (B), um der Flächenkrümmung des jeweiligen Brillenglases zu folgen, durchgeführt werden, wobei das Brillenglas und die Polierwerkzeuge gleich- oder gegensinnig mit gleichen oder verschiedenen Drehzahlen um ihre Drehachsen (A, A', C) angetrieben werden können.

Darüber hinaus gestattet die vorbekannte Vorrichtung unterschiedliche, insbesondere automatisierte Bearbeitungsstrategien, z.B. ein Vor- und Feinpolieren mit unterschiedlichen Polierbelägen oder ein Arbeiten mit verschieden großen (Werkzeug-Durchmesser) und/oder verschieden gekrümmten (Werkzeug-Krümmungsradius) Polierwerkzeugen, so dass die Vorrichtung sehr vielfältig einsetzbar ist, ohne dass dies längere Prozesszeiten erfordert. Des Weiteren werden Umrüstzeiten vermieden, wenn die Vorrichtung mehrere verschiedene Werkzeuge hat und somit die Werkzeuge zwischen den einzelnen Bearbeitungsaufträgen nicht gewechselt werden müssen.

Die bei diesem Stand der Technik zum Einsatz kommenden flexiblen Polierwerkzeuge - aufgrund ihrer Form auch "Polierteller" genannt - besitzen einen im Wesentlichen dreiteiligen bzw. mehrlagigen Aufbau, mit (1.) einem der Werkzeugspindel zugewandten, im Verhältnis festen bzw. starren Träger- oder Grundkörper, an dem (2.) eine demgegenüber weichere Schicht aus einem elastischen Material, z.B. eine Schaumstoffschicht befestigt ist, der (3.) eine dem Werkstück zugewandte Schleifoder Polierfolie (Poliermittelträger) als bearbeitungsaktiver Werkzeugbestandteil aufliegt. Infolge der elastischen Verformbarkeit der Schaumstoffschicht kann sich die Polierfolie in gewissen Grenzen *in situ* an die Geometrie der zu bearbeitenden Fläche anpassen. Dies sowohl in "statischer" Hinsicht, d.h. von Brillenglas zu Brillenglas, welche es zu bearbeiten gilt und die sich in ihrer Geometrie, insbesondere der Flächenkrümmung, in der Regel unterscheiden, als auch in "dynamischer" Hinsicht, d.h. während der eigentlichen Bearbeitung eines bestimmten Brillenglases, bei der eine Relativbewegung zwischen dem Polierteller und dem Brillenglas erfolgt. Die Elastizität der Schaumstoffschicht beeinflusst darüber hinaus in wesentlichem Maße das Abtragsverhalten des Poliertellers während des Polierprozesses.

Derartige Polierwerkzeuge unterliegen während ihres bestimmungsgemäßen Gebrauchs einer kontinuierlichen Abnutzung, die sich bei der Bearbeitung infolge von scharfen Rändern an den zu bearbeitenden Brillengläsern, hohen Zylinderkurven, d.h. starken Krümmungen bzw. Krümmungsunterschieden der optisch wirksamen Flächen und/oder durch kleine Durchmesser der zu bearbeitenden Brillengläser noch verstärkt. Denn beim Überstreichen dieser "scharfen Randzonen" können in der Schaumstoffschicht der flexiblen Polierwerkzeuge Einschnitte entstehen und Scherwirkungen auftreten, die neben einem erhöhten Verschleiß zu einer Bildung von weiteren Einschnitten oder Fransen an den Polierwerkzeugen führen können. Es besteht die Gefahr, dass diese Beschädigungen an den Polierwerkzeugen bei den oben beschriebenen, ggf. automatisiert ablaufenden Polierprozessen nicht rechtzeitig erkannt werden. Dann aber werden weitere Brillengläser mit beschädigten, ggf. sogar zerstörten Polierwerkzeugen poliert, was letztlich einen erhöhten Ausschuss, d.h. unzureichend polierte oder beschädigte Brillengläser verursacht.

Eine Möglichkeit zur Überprüfung des Verschleißzustands solcher Polierwerkzeuge besteht darin, die Werkzeugoberfläche, d.h. den Poliermittelträger gegenüber Vergleichskarten visuell abzugleichen. Ein solches Vorgehen ist indes aufwendig, bedarf einer sehr guten Schulung des Bedienpersonals, unterliegt dennoch subjektiven Schwankungen bei der Beurteilung und ist schwer in einem automatisierten Prozess einzugliedern.

Eine weitere Vorgehensweise zur Überprüfung des Verschleißzustands von insbesondere Polierwerkzeugen wird in der Druckschrift WO 2012/065712 A1 beschrieben. Gemäß diesem Stand der Technik erfolgt die Erfassung der Abnutzung bzw. des Zustands eines Polierwerkzeugs insbesondere unter Zuhilfenahme eines auf der Werkzeugoberfläche des Polierwerkzeugs gedruckten Informationsträgers, namentlich wenigstens eines Barcodes, der beim Polieren mit abgearbeitet und somit teilweise oder ganz entfernt bzw. unlesbar wird. Der Barcode wird mittels einer Erfassungseinrichtung insbesondere in Form einer Kamera erfasst, so dass mittelbar über die Lesbarkeit des Barcodes Rückschlüsse auf den Zustand des Polierwerkzeugs gezogen werden können.

Ein Problem ist hierbei indes darin zu sehen, dass der mit der Kamera erfassbare Kontrast zwischen der Werkzeugoberfläche und dem Barcode sehr gering ist, weil die Polierwerkzeuge während ihres Gebrauchs mit Poliermittel durchtränkt bzw. benetzt sind. Dies kann zum einen dazu führen, dass fehlerhafte bzw. verschlissene Werkzeuge nicht sicher erkannt und deshalb weiter zum Polieren von Brillengläsern eingesetzt werden. Zum anderen besteht die Möglichkeit, dass Polierwerkzeuge vorzeitig ausgetauscht werden, weil sie als fehlerhaft "bewertet" wurden, obwohl sie tatsächlich noch unbeschädigt bzw. nicht verschlissen, also noch einsetzbar sind. Wünschenswert wäre insofern eine Möglichkeit der Verschleißerkennung, die zuverlässiger über die tatsächlichen Verhältnisse Auskunft gibt.

Schließlich wird in der dem vorliegenden Anmeldungsgegenstand nächstgelegenen, älteren deutschen Patentanmeldung 10 2017 003 014.6 derselben Anmelderin eine Vorrichtung zur Feinbearbeitung von optisch wirksamen Flächen an Werkstücken offenbart, die einen Arbeitsraum hat, in dem eine Werkstückaufnahme und wenigstens eine Werkzeugaufnahme einander gegenüberliegen und relativ zueinander bewegbar sind. Hierbei ist ein Bearbeitungsbereich eines an der Werkzeugaufnahme um eine Drehachse drehend antreibbar gehaltenen Polierwerkzeugs mit einem an der Werkstückaufnahme gehaltenen Werkstück in Bearbeitungseingriff bringbar und im Bearbeitungseingriff über das Werkstück führbar. Im Arbeitsraum ist eine Sensoreinrichtung zur Verschleißerkennung an dem Polierwerkzeug vorgesehen, die eine erste Sensoranordnung und eine davon verschiedene, zweite Sensoranordnung umfasst. Letztere sind im Arbeitsraum relativ zu dem Polierwerkzeug positionierbar, so dass die erste Sensoranordnung im Wesentlichen normal zum Bearbeitungsbereich ausgerichtet ist, während die zweite Sensoranordnung im Wesentlichen tangential zum Bearbeitungsbereich ausgerichtet ist. Während die erste Sensoranordnung der Sensoreinrichtung vorzugsweise dazu dient, eine lumineszierende Substanz zu erfassen, die erst ab einem vorbestimmten Verschleiß an dem Bearbeitungsbereich des Polierwerkzeugs erkennbar ist, ist die zweite Sensoranordnung der Sensoreinrichtung bevorzugt dazu vorgesehen, an dem Bearbeitungsbereich des Polierwerkzeugs eine unzulässige Abweichung des Bearbeitungsbereichs von einer Sollgeometrie zu erfassen. Hierdurch können verschiedene Verschleißzustände an den Polierwerkzeugen zuverlässig erkannt werden, ohne dass dies eine wesentliche Verlängerung der Prozesszeiten bedingt.

### AUFGABENSTELLUNG

Der Erfindung liegt die Aufgabe zugrunde, eine möglichst einfach und kompakt ausgebildete Vorrichtung zur Bearbeitung von optischen Werkstücken, insbesondere Brillengläsern, mit einer integrierten Sensoreinrichtung zur Verschleißerkennung an den eingesetzten Werkzeugen zu schaffen, bei der Verschleißzustände an den Werkzeugen möglichst zuverlässig erkannt werden können, ohne dass dies überhaupt eine oder eine wesentliche Verlängerung der Prozesszeiten bedingt.

### DARSTELLUNG DER ERFINDUNG

Diese Aufgabe wird durch eine Vorrichtung zur Bearbeitung von optischen Werkstücken mit den Merkmalen des Patentanspruchs 1 gelöst. Vorteilhafte Ausgestaltungen der Erfindung sind Gegenstand der Patentansprüche 2 bis 18.

Eine erfindungsgemäße Vorrichtung zur Bearbeitung von optischen Werkstücken, insbesondere Brillengläsern, hat einen über eine wahlweise verschließbare Öffnung von außen zugänglichen Arbeitsraum, in dem eine Werkstückaufnahme und wenigstens eine Werkzeugaufnahme einander gegenüberliegen und relativ zueinander bewegbar sind, so dass ein Bearbeitungsbereich eines an der Werkzeugaufnahme gehaltenen Werkzeugs mit einem an der Werkstückaufnahme gehaltenen Werkstück in Bearbeitungseingriff bringbar und im Bearbeitungseingriff über das Werkstück führbar ist, wobei zur Verschleißerkennung an dem Werkzeug eine Sensoreinrichtung mit wenigstens einer berührungslos arbeitenden Sensoranordnung vorgesehen ist, die außerhalb des Arbeitsraums von einer geschützten Ruheposition in eine Erfassungsposition bewegbar ist und umgekehrt, und wobei die Sensoreinrichtung angepasst ist, in der Erfassungsposition der Sensoranordnung durch die geöffnete Öffnung des Arbeitsraums hindurch an dem Bearbeitungsbereich des an der Werkzeugaufnahme gehaltenen Werkzeugs eine unzulässige Abweichung des Bearbeitungsbereichs von einer Sollgeometrie zu erfassen.

Bei der erfindungsgemäßen Ausgestaltung der Vorrichtung kann vermittels der Sensoreinrichtung zuverlässiger festgestellt werden, ob sich der Verschleiß des Werkzeugs, bei dem es sich z.B. um ein Schleifwerkzeug oder ein Polierwerkzeug handeln kann, im Rahmen zulässiger Abnutzung bewegt oder aber Ausmaße angenommen hat, bei denen sich ein weiterer Einsatz des Werkzeugs verbietet, weil dabei beispielsweise eine Beschädigung des Werkstücks zu befürchten stünde. Die erhöhte Zuverlässigkeit bei der Verschleißerkennung liegt zunächst u.a. darin begründet, dass zur Verschleißerkennung kein Lesen oder Nicht-Lesen von Informationen am Werkzeug mit den damit verbundenen Erfassungsschwierigkeiten erfolgt, wie dies beim eingangs geschilderten Stand der Technik der Fall ist, sondern ein Vergleich zwischen einer (vorhandenen) Istgeometrie und einer (erwünschten) Sollgeometrie an dem Bearbeitungsbereich des an der Werkzeugaufnahme gehaltenen Werkzeugs, der bei der Bearbeitung eines Werkstücks geometriebildend ist. Erst wenn bei diesem Vergleich eine unzulässige Abweichung der Istgeometrie von der Sollgeometrie vorliegt, die eine inkorrekte Geometriebildung am Werkstück befürchten lässt, sind Maßnahmen zu ergreifen, z.B. ein Wechsel des untersuchten Werkzeugs.

Einer hohen Zuverlässigkeit der Verschleißerkennung ist es dabei sehr förderlich, dass die wenigstens eine berührungslos arbeitende Sensoranordnung der Sensoreinrichtung quasi zweifach geschützt ist: Zum einen befindet sich die Sensoranordnung außerhalb des Arbeitsraums, von wo die Verschleißerkennung durch die geöffnete Öffnung des Arbeitsraums hindurch erfolgt. Demgemäß ist die Sensoranordnung nie unmittelbar der verschmutzungsträchtigen Arbeitsraumumgebung ausgesetzt, die etwa im Falle einer Poliervorrichtung bei der Bearbeitung durch den Sprühnebel des eingesetzten, abrasiven, flüssigen Poliermittels gekennzeichnet ist, der sich in dicken Schichten im Arbeitsraum ablagert. Mithin können sich keine der Erfassungsgenauigkeit abträgliche Poliermittelablagerungen od.dgl. auf der Sensoranordnung ausbilden. Zum anderen ist die Sensoranordnung auch außerhalb des Arbeitsraums gegen solche oder ähnliche Einflüsse wie auch mechanische Beschädigungen besonders geschützt, indem sie von ihrer Erfassungsposition, in der sie der Öffnung des Arbeitsraums gegenüberliegt, in eine geschützte Ruheposition und umgekehrt bewegbar ist. Auch dort kann also eine Verschmutzung durch z.B. herabtropfendes Poliermittel beim Werkzeug- oder Werkstückwechsel zuverlässig vermieden werden.

Die mit der erfindungsgemäßen Sensoreinrichtung durchführbare Verschleißerkennung bedingt ferner keine oder keine wesentliche Verlängerung der Prozesszeiten. Vorteilhaft kann die Verschleißerkennung vom Prozessmanagement hier mit den an der Vorrichtung ohnehin anstehenden Be- und Entladevorgängen parallelisiert werden. Die eigentliche Inspektion des jeweiligen Werkzeugs kann dabei etwa vor oder im Anschluss an einen Werkstückwechsel erfolgen. Sind mehrere Werkzeugaufnahmen mit Werkzeugen vorhanden, kann die Überprüfung auf Verschleiß sämtliche im Arbeitsraum befindlichen Werkzeuge umfassen, oder aber auch nur das zuletzt benutzte Werkzeug, falls das andere (oder die anderen) Werkzeug(e) nicht im Einsatz gewesen sein sollte(n).

Nicht zuletzt nimmt die erfindungsgemäße Sensoreinrichtung im Arbeitsraum der Vorrichtung auch keinen Bauraum in Anspruch, was eine kompakte Ausbildung der Vorrichtung unterstützt.

Was das Erfassungsprinzip der wenigstens einen Sensoranordnung der Sensoreinrichtung angeht, sind natürlich verschiedene Erfassungsprinzipien für einen Ist-Soll-Abgleich von Werkzeuggeometrien bzw. -konturen denkbar. Im Hinblick auf einen geringen Aufwand und eine geringe Fehleranfälligkeit ist allerdings ein Ansatz bevorzugt, bei dem die wenigstens eine Sensoranordnung oder jede der Sensoranordnungen einen Laser und einen Lichtschnittsensor umfasst, wobei mittels des Lichtschnittsensors eine von dem Laser auf dem Bearbeitungsbereich des zugeordneten Werkzeugs abbildbare Laserlinie über ein Triangulationsverfahren detektierbar ist. Vorteilhaft ist ein solches Vorgehen unabhängig vom Umgebungslicht. Entsprechende Sensoranordnungen sind problemlos im Handel erhältlich.

Grundsätzlich kann die Bewegung zwischen Ruhe- und Erfassungsposition der wenigstens einen Sensoranordnung durch eine Schwenk- oder Drehbewegung oder eine Hub-Drehbewegung erfolgen. Mit Blick auf einen kompakten und einfachen Aufbau ist es indes bevorzugt, wenn die wenigstens eine Sensoranordnung an einem Sensorhalter der Sensoreinrichtung montiert ist, der bezüglich eines ortsfest angebrachten Grundrahmens der Sensoreinrichtung linear verschiebbar ist, um die Sensoranordnung von der geschützten Ruheposition in die Erfassungsposition und umgekehrt zu bewegen.

Vorzugsweise ist der Sensorhalter dabei gegenüber dem Grundrahmen mittels einer Linearführung geführt, die einen am Grundrahmen befestigten Führungswagen und eine an dem Sensorhalter montierte Führungsschiene umfasst. Eine solche Ausgestaltung ist vorteilhaft steif und verdrehsicher. Die Erfassungsposition der Sensoranordnung kann unter Zuhilfenahme einer solchen Führung mit besonders hoher Reproduzierbarkeit angefahren werden.

Prinzipiell ist es denkbar, die Sensoreinrichtung manuell zu bedienen, um deren Sensoranordnung(en) von der geschützten Ruheposition in die Erfassungsposition und umgekehrt zu bewegen. Für eine automatisierte Fertigung bevorzugt ist es indes, wenn die Sensoreinrichtung einen mit dem Sensorhalter antriebsverbundenen Linearantrieb aufweist. Als Linearantrieb können grundsätzlich ein Kugelgewindetrieb, ein Schrittmotor mit Zahnstange, etc. zum Einsatz kommen. Vorzugsweise handelt es sich bei dem Linearantrieb allerdings um einen Pneumatikzylinder, der betätigungswirksam zwischen dem Grundrahmen und dem Sensorhalter montiert ist. Solche Pneumatikzylinder sind vorteilhaft einfach, schnell, zuverlässig und preisgünstig.

Vorzugsweise kann ferner zwischen dem Grundrahmen und dem Sensorhalter ein Stoßdämpfer angeordnet sein, der die Linearverschiebung des Sensorhalters relativ zum Grundrahmen begrenzt und damit die Erfassungsposition der wenigstens einen Sensoranordnung definiert. Auch diese Maßnahme ist einer hohen Zuverlässigkeit der Verschleißerkennung förderlich; harte Stöße und Erschütterungen, die beispielsweise zu einem Lösen der Sensoranordnung(en) führen könnten, werden vorteilhaft abgedämpft.

Ferner kann die wenigstens eine Sensoranordnung in der geschützten Ruheposition mittels einer Abdeckung der Sensoreinrichtung gegenüber der Umgebung abgedichtet abgedeckt sein. So kann z.B. ein Dachabschnitt zusammen mit dem Sensorhalter verfahren und die Sensoreinrichtung schirmartig schützen.

Besonders vorteilhaft ist es, wenn die Abdeckung der Sensoreinrichtung eine Klappe umfasst, die an einem Rand gelagert ist, so dass die Klappe von einer der Ruheposition der wenigstens einen Sensoranordnung zugeordneten Schließstellung in eine der Erfassungsposition der wenigstens einen Sensoranordnung zugeordnete Öffnungsstellung und umgekehrt verschwenkbar ist. Eine solche Klappe hat quasi eine Vordachfunktion und schützt damit die Sensoranordnung(en) auch im ausgefahrenen Zustand von der Seite bzw. vorne gegen Spritzer und vor mechanischer Beschädigung. Hierbei kann die Klappe bevorzugt in ihrer Schließstellung mit einer ortsfest angebrachten, um die Sensoreinrichtung umlaufenden Dichtung zusammenwirken, um die Sensoreinrichtung gegenüber der Umgebung abzudichten.

Grundsätzlich kann die Klappe einen eigenen Antrieb zum Aufschwenken bzw. Schließen besitzen. Im Hinblick auf eine einfache Ausgestaltung und eine hohe Funktionssicherheit ist es allerdings bevorzugt, wenn die Klappe nach Maßgabe einer Verschiebung des Sensorhalters relativ zum Grundrahmen verschwenkbar ist. Dabei kann der Sensorhalter besonders reibungs- und verschleißarm über einen drehbar gelagerten Wälzkörper an der Klappe angreifen. In energetisch günstiger und kompakter Ausgestaltung kann die Klappe ferner in die Schließstellung federvorgespannt sein, z.B. über zwei an der Klappe angreifende Zugfedern.

Des Weiteren kann die Klappe mit einem ortsfest montierten Näherungsschalter zusammenwirken, der angepasst ist, die Schließstellung der Klappe und damit die Ruheposition der wenigstens einen Sensoranordnung zu detektieren. Eine solche mittelbare Erkennung der geschützten Ruheposition der Sensoranordnung(en) ist zuverlässiger als eine Erfassung am Sensorhalter, weil ein Offenstehen der Klappe ausgeschlossen werden kann.

Ist in bevorzugter Ausgestaltung die Sensoreinrichtung über einen Halterahmen direkt an einem tragenden Rahmen der Vorrichtung montiert, der den Arbeitsraum umgibt, besteht durch diese unmittelbare Koppelung vorteilhaft eine ortsfeste Beziehung der Verschleißsensorik zu den Vorrichtungsbestandteilen, insbesondere den Werkzeugspindeln und Werkzeugen.

Im weiteren Verfolg des Erfindungsgedankens kann eine der Werkstückaufnahme gegenüberliegende, weitere Werkzeugaufnahme vorgesehen sein, die im Arbeitsraum relativ zur Werkstückaufnahme bewegbar ist, so dass ein Bearbeitungsbereich eines an der weiteren Werkzeugaufnahme gehaltenen, weiteren Werkzeugs mit einem an der Werkstückaufnahme gehaltenen Werkstück in Bearbeitungseingriff bringbar und im Bearbeitungseingriff über das Werkstück führbar ist, wobei die weitere Werkzeugaufnahme mit dem daran gehaltenen, weiteren Werkzeug in paralleler Anordnung zu und gemeinsam mit der erstgenannten Werkzeugaufnahme bezüglich der Sensoreinrichtung in eine Prüfposition bewegbar ist, in der mittels der Sensoreinrichtung die Verschleißerkennung durch die geöffnete Öffnung des Arbeitsraums hindurch durchführbar ist, und wobei die Sensoreinrichtung zwei Sensoranordnungen umfasst, die jeweils einer Werkzeugaufnahme zugeordnet sind. Vorteilhaft ist so z.B. eine zeitgleiche Überprüfung der Werkzeuge möglich. Bevorzugt sind dabei die zwei Sensoranordnungen identisch ausgebildet, was im Hinblick auf geringe Gestehungskosten und die Auswerteverfahren von Vorteil ist, die gleich oder ähnlich ausgeführt werden können.

Schließlich kann der Sensorhalter der Sensoreinrichtung an einem Halterkopf zwei Montageflächen für jeweils eine der Sensoranordnungen aufweisen, die in keilförmiger Anordnung einen spitzen Winkel miteinander einschließen, bezüglich einer Längsachse des Sensorhalters einen Querversatz zueinander besitzen und mit Langlöchern versehen sind, die auf den Montageflächen eine relativ zueinander verdrehte Montage der Sensoranordnungen gestatten. Eine solche Ausgestaltung des Sensorhalters mit montierten Sensoranordnungen ist schließlich nicht nur sehr kompakt, sondern gestattet darüber hinaus eine zuverlässige Sensierung der Werkzeuge auch durch eher "kleine" Öffnungen zum Arbeitsraum.

### KURZE BESCHREIBUNG DER ZEICHNUNGEN

Im Folgenden wird die Erfindung anhand eines bevorzugten Ausführungsbeispiels unter Bezugnahme auf die beigefügten, teilweise vereinfachten bzw. schematischen und nicht maßstabsgerechten Zeichnungen näher erläutert. In den Zeichnungen zeigen:

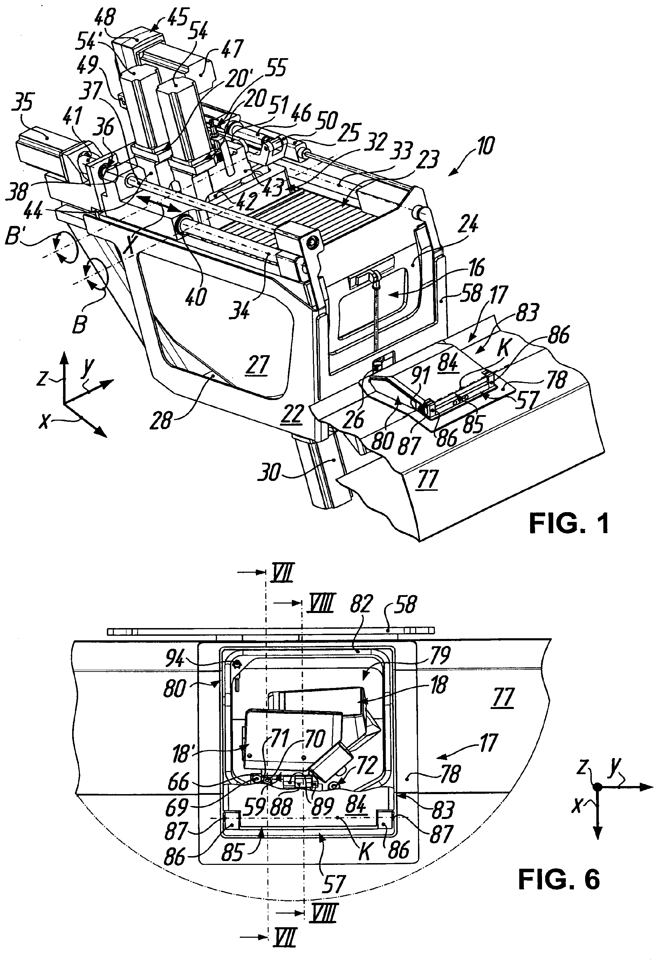

- Fig. 1: eine perspektivische Ansicht einer erfindungsgemäßen Vorrichtung zur Polierbearbeitung von Brillengläsern von schräg oben / vorne links, mit einem Werkzeugschlitten (Linearachse X) für zwei Werkzeugspindeln, der sich in einer zurückgezogenen Stellung befindet, wobei ein nach unten von einer Wanne begrenzter Arbeitsraum mittels einer faltenbalgartigen Arbeitsraumabdeckung nach oben und einer Schiebetür nach vorne verschlossen ist, vor welcher außerhalb des Arbeitsraums in einer zu beiden Seiten abgebrochen dargestellten Blechverkleidung eine Sensoreinrichtung zur Werkzeugverschleißerkennung sitzt, die sich in einem geschlossenen Ruhezustand befindet;

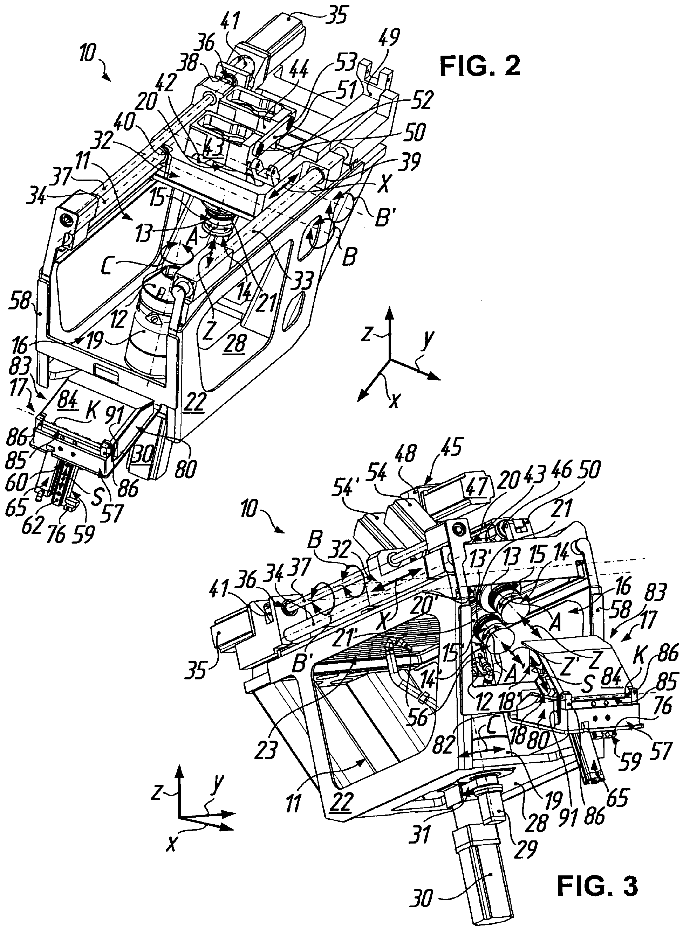

- Fig. 2: eine perspektivische Ansicht der Vorrichtung gemäß Fig. 1 von schräg oben / vorne rechts, bei der gegenüber der Darstellung in Fig. 1 neben der Blechverkleidung im Bereich der Sensoreinrichtung die den Arbeitsraum begrenzenden Teile (Wanne, Schiebetür, faltenbalgartige Arbeitsraumabdeckungen), Antriebe der Werkzeugspindeln sowie ein Linearantrieb zum Verschwenken derselben weggelassen sind, insbesondere zur Veranschaulichung von Schwenkjochen (Schwenk-Stellachsen B, B') für die hintereinander angeordneten Werkzeugspindeln im Werkzeugschlitten (Linearachse X);
- Fig. 3: eine perspektivische Ansicht der Vorrichtung gemäß Fig. 1 von schräg unten / vorne links, mit Darstellung sämtlicher Bewegungsachsen bzw. -möglichkeiten (Werkzeug-Drehachsen A, A'; Schwenk-Stellachsen B, B'; Werkstück-Drehachse C; Linearachse X; Zustellachsen Z, Z') für einen Polierprozess, ohne Wanne und Schiebetür, wobei die Werkzeugspindeln in vorderster Stellung des Werkzeugschlittens (Linearachse X) um die SchwenkStellachsen B, B' vorgeschwenkt sind, so dass an Werkzeugaufnahmen der Werkzeugspindeln gehaltene Polierwerkzeuge der Sensoreinrichtung zugewandt sind, die sich zur Verschleißerkennung an den Polierwerkzeugen in einem geöffneten Erfassungszustand befindet;

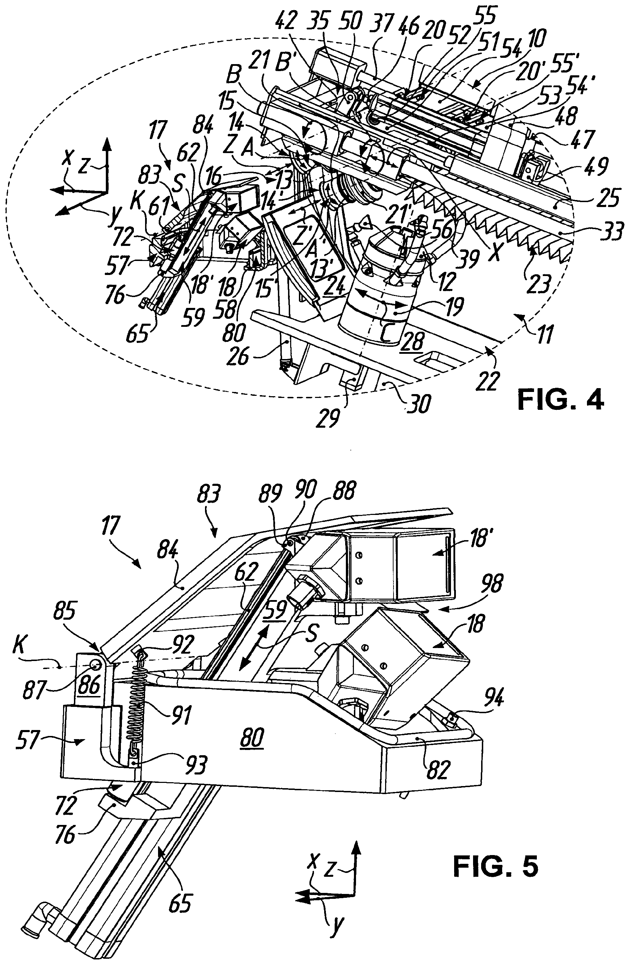

- Fig. 4: eine nur im Bereich der geöffneten Sensoreinrichtung aufgebrochene, perspektivische Ansicht der Vorrichtung gemäß Fig. 1 von schräg oben / hinten rechts, mit Position der Bewegungsachsen (Schwenk-Stellachsen B, B'; Linearachse X; Zustellachsen Z, Z') entsprechend Fig. 3, wobei gegenüber der Darstellung in Fig. 3 ein Teil eines den Arbeitsraum umgebenden Rahmens der Vorrichtung weggelassen und die Schiebetür zum Arbeitsraum in einer geöffneten Stellung gezeigt ist, insbesondere um zu veranschaulichen, wie Sensoranordnungen der Sensoreinrichtung in deren Erfassungszustand außerhalb des Arbeitsraums den Polierwerkzeugen an den Werkzeugspindeln im Arbeitsraum bezogen auf eine von der Schiebetür freigegebene Öffnung zum Arbeitsraum einander gegenüberliegen;
- Fig. 5: eine vom Blickwinkel her der Fig. 4 ähnliche perspektivische Ansicht der von der Vorrichtung gemäß Fig. 1 separiert dargestellten Sensoreinrichtung, wobei sich die Sensoranordnungen der Sensoreinrichtung unterhalb einer hochgeschwenkten Klappe der Sensoreinrichtung in einer ausgefahrenen Erfassungsposition befinden;
- Fig. 6: eine seitlich und nach unten abgebrochene Draufsicht auf die in der Blechverkleidung eingelassene, über einen Halterahmen an der Vorrichtung von Fig. 1 montierbare, ansonsten aber von der Vorrichtung gemäß Fig. 1 separiert dargestellte Sensoreinrichtung von oben in Fig. 1, die im Bereich der geschlossenen Klappe aufgebrochen gezeigt ist, um den Blick auf die in ihre Ruheposition eingefahrenen Sensoranordnungen darunter freizugeben;

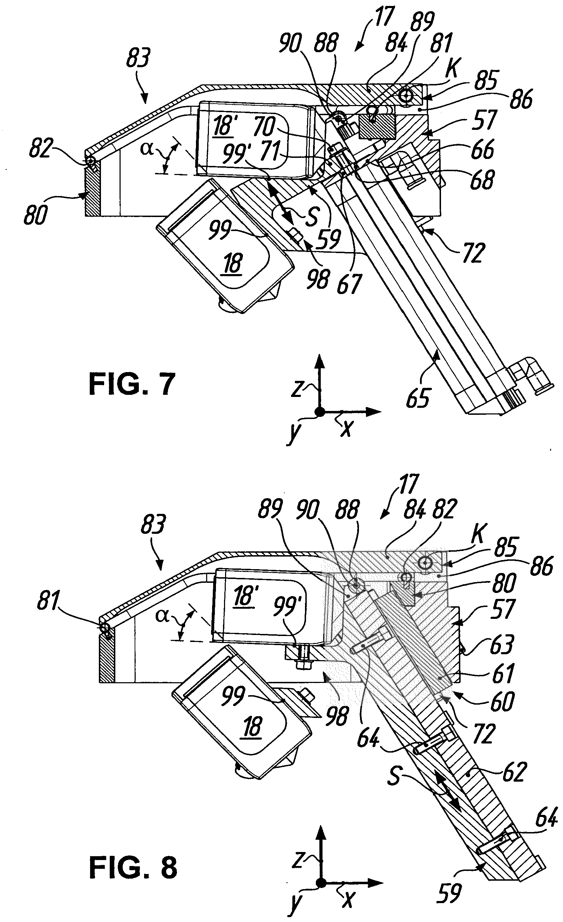

- Fig. 7: eine Schnittansicht der Sensoreinrichtung der Vorrichtung gemäß Fig. 1 entsprechend der Schnittverlaufslinie VII-VII in Fig. 6, ohne Blechverkleidung und Halterahmen, wobei die Schnittansicht insbesondere Details zu einem Linearantrieb für einen Sensorhalter zeigt, der die Sensoranordnungen der Sensoreinrichtung trägt;
- Fig. 8: eine Schnittansicht der Sensoreinrichtung der Vorrichtung gemäß Fig. 1 entsprechend der Schnittverlaufslinie VIII-VIII in Fig. 6, ohne Blechverkleidung und Halterahmen, wobei der Schnittansicht insbesondere Einzelheiten zu einer Linearführung für den Sensorhalter zu entnehmen sind;

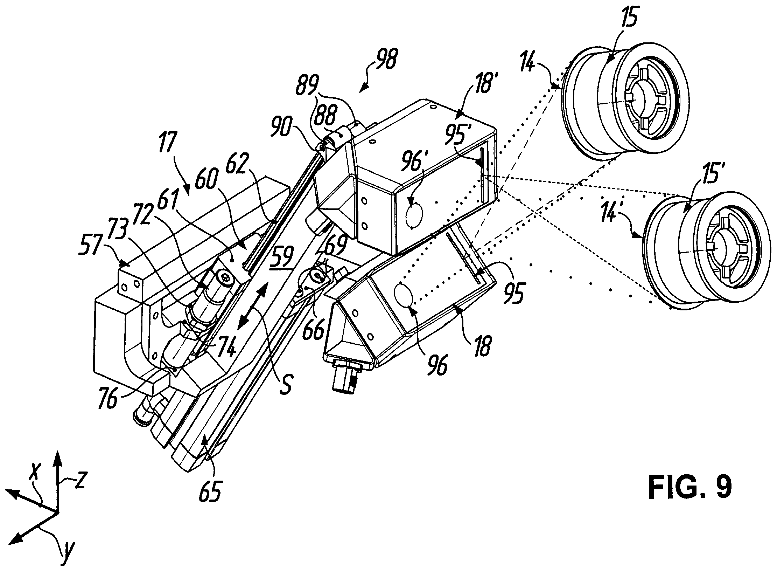

- Fig. 9: eine vom Blickwinkel her wiederum der Fig. 4 ähnliche perspektivische Ansicht der von der Vorrichtung gemäß Fig. 1 separiert dargestellten Sensoreinrichtung, bei der im Vergleich zur Fig. 5 die mit der Klappe verbundenen bzw. zusammenwirkenden Teile weggelassen sind, um weitere Details der Linearführung zu zeigen, wobei sich die Sensoranordnungen in der ausgefahrenen Erfassungsposition befinden, in der sie den in Fig. 9 angedeuteten, entsprechend der Fig. 3 positionierten Polierwerkzeugen gegenüberliegen;

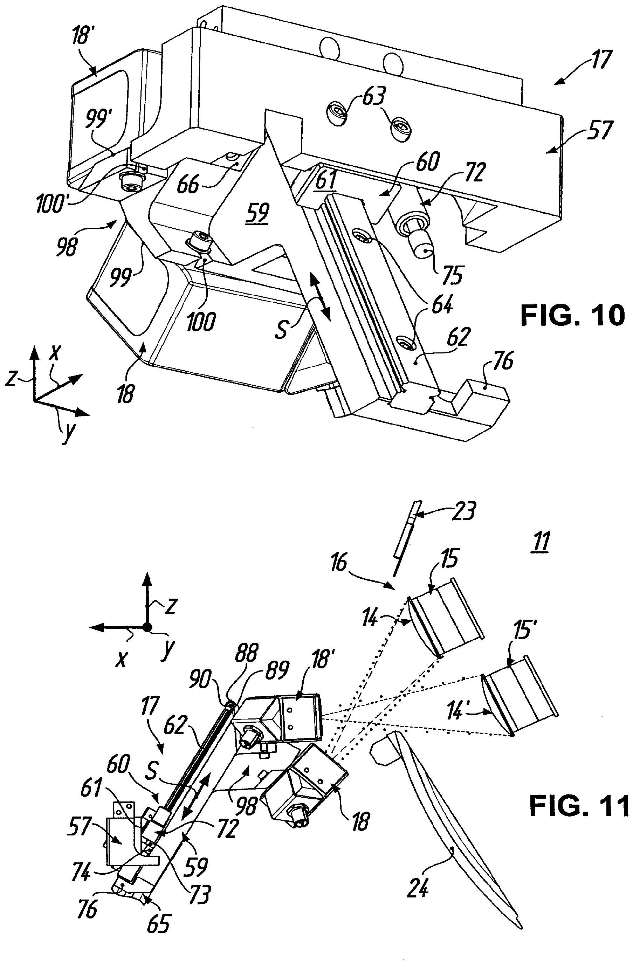

- Fig. 10: eine vom Blickwinkel her der Fig. 3 ähnliche perspektivische Ansicht der von der Vorrichtung gemäß Fig. 1 separiert dargestellten Sensoreinrichtung, in der über die Vereinfachungen der Fig. 9 hinaus der Linearantrieb weggelassen ist, um weitere Einzelheiten der Linearführung und der Befestigung der Sensoranordnungen an dem Sensorhalter zu zeigen, wobei sich die Sensoranordnungen in der eingefahrenen Ruheposition befinden;
- Fig. 11: eine im Bereich des Linearantriebs abgebrochene Seitenansicht der von der Vorrichtung gemäß Fig. 1 separiert dargestellten Sensoreinrichtung von rechts in Fig. 3 im Erfassungszustand und mit den Vereinfachungen der Fig. 9, wobei als Teile der Vorrichtung von Fig. 1, welche die Öffnung zum Arbeitsraum im geöffneten Zustand nach oben und nach unten begrenzen, eine an der Arbeitsraumabdeckung montierte Dichtplatte und die Schiebetür angedeutet sind, um zu illustrieren, wie die Sensoranordnungen durch die Öffnung hindurch die in Fig. 11 ebenfalls wie in Fig. 9 angedeuteten, entsprechend der Fig. 3 positionierten Polierwerkzeuge erfassen;

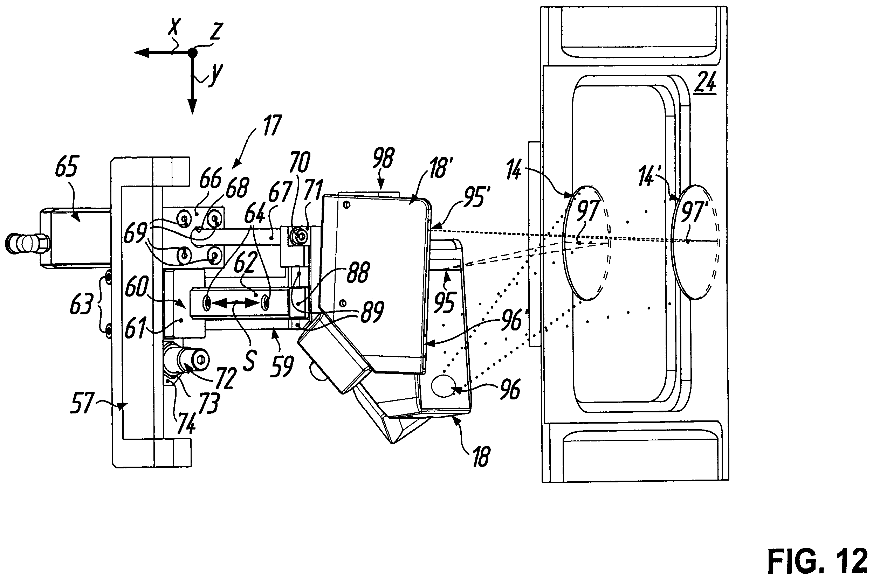

- Fig. 12: eine Draufsicht auf die von der Vorrichtung gemäß Fig. 1 separiert dargestellte Sensoreinrichtung von oben in den Fig. 9 und 11 sowie im Erfassungszustand und mit den Vereinfachungen der Fig. 9 und 11, als weitere Illustration, wie die Sensoranordnungen über die die Öffnung zum Arbeitsraum begrenzende Schiebetür hinweg die entsprechend der Fig. 3 positionierten Polierwerkzeuge erfassen, von denen in Fig. 12 lediglich Poliermittelträger angedeutet sind;

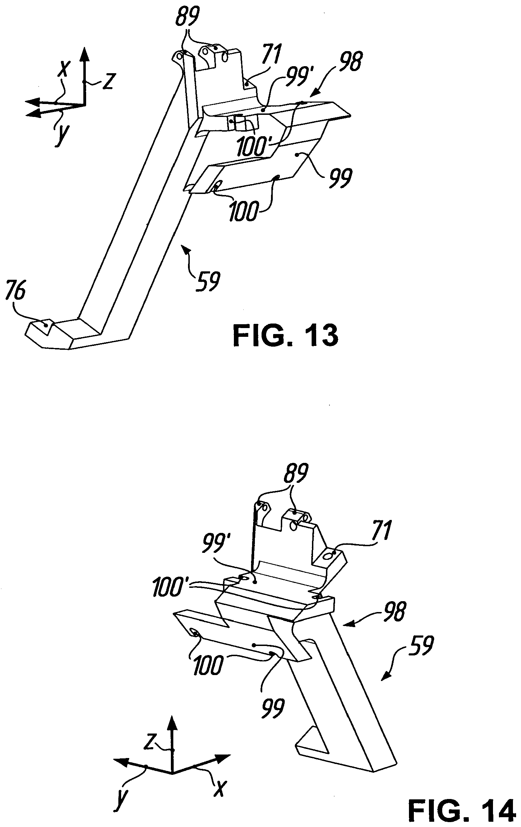

- Fig. 13: eine perspektivische Ansicht des von der Sensoreinrichtung gemäß den Fig. 5 und 9 separiert dargestellten Sensorhalters mit Blick auf Montageflächen für die-Sensoranordnungen von schräg oben / hinten rechts;
- Fig. 14: eine perspektivische Ansicht des entsprechend Fig. 13 von der Sensoreinrichtung separiert dargestellten Sensorhalters mit Blick auf die Montageflächen für die Sensoranordnungen von schräg oben / hinten links;

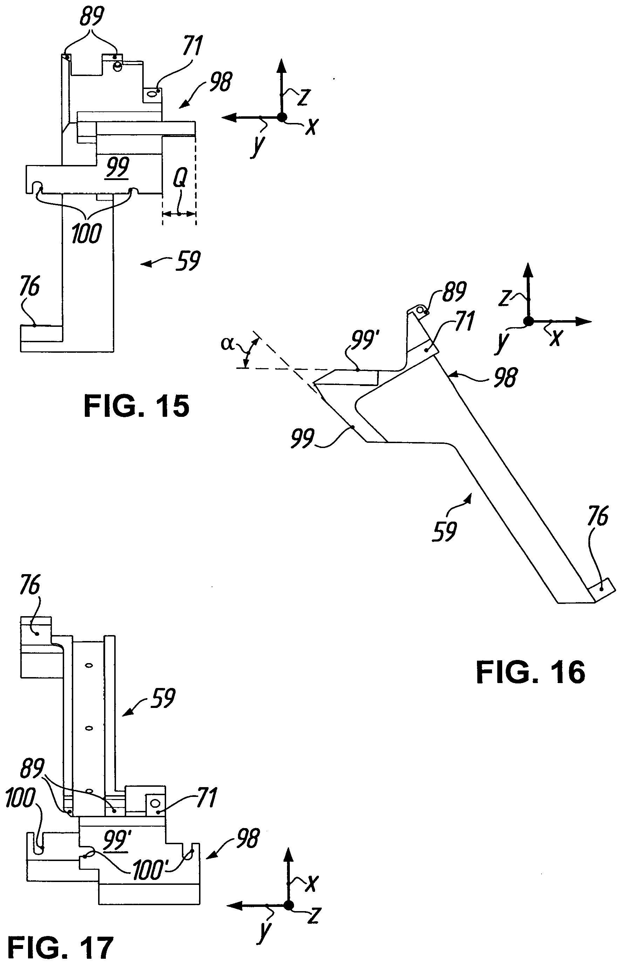

- Fig. 15: eine Rückansicht des Sensorhalters gemäß den Fig. 13 und 14;
- Fig. 16: eine Seitenansicht des Sensorhalters gemäß den Fig. 13 und 14 von rechts in Fig. 15; und
- Fig. 17: eine Draufsicht auf den Sensorhalter gemäß den Fig. 13 und 14 von oben in Fig. 15.

Zu den Zeichnungen sei an dieser Stelle noch angemerkt, dass die erfindungsgemäße Vorrichtung im dargestellten Ausführungsbeispiel eine (von ggf. mehreren) Polierzelle(n) einer Poliermaschine für Brillengläser ausbildet, wobei die Vorrichtung in den Zeichnungen allerdings von der Poliermaschine separiert dargestellt ist. Die Darstellung erfolgt hierbei in einem rechtwinkligen kartesischen Koordinatensystem, in welchem der Buchstabe x die Längenrichtung, der Buchstabe y die Breitenrichtung und der Buchstabe z die Höhenrichtung der Poliermaschine bezeichnet. Infolge der separierten Darstellung sind Bestandteile der Poliermaschine, wie die Bedieneinheit und Steuerung, weitere Stationen (z.B. Brillenglas-Waschstation) und Handlingsysteme (etwa Förderbänder für Rezeptkästen, Portalhandlingsystem zum Transport der Brillengläser, etc.) nicht gezeigt. Darüber hinaus wurden in den Zeichnungen zur Freigabe der Sicht auf wesentliche Bauteile bzw. Baugruppen der Vorrichtung und zur Vereinfachung der Darstellung zumeist insbesondere auch Teile der Verkleidung, Ablagen für Werkstücke und Werkzeuge, die Versorgungseinrichtungen (einschließlich Leitungen, Schläuche und Rohre) für Strom, Druckluft und Poliermittel, der Poliermittelrücklauf sowie die Mess-, Wartungsund Sicherheitseinrichtungen weggelassen, weil sie für das Verständnis der Erfindung nicht erforderlich erscheinen und dem Fachmann ohnehin geläufig sind.

### DETAILLIERTE BESCHREIBUNG DES AUSFÜHRUNGSBEISPIELS

In den Fig. 1 bis 4 ist eine Vorrichtung zur Bearbeitung von optischen Werkstücken, insbesondere Brillengläsern, mit dem Bezugszeichen 10 beziffert. Die Vorrichtung 10 kann als Polierzelle ggf. zusammen mit weiteren Vorrichtungen von identischem Aufbau in einem gemeinsamen Maschinengestell (nicht gezeigt) einer Poliermaschine montiert sein, wie es aus der schon eingangs erwähnten Druckschrift DE 10 2014 015 053 A1 (Fig. 1) bekannt ist. Die Vorrichtung 10 besitzt allgemein einen Arbeitsraum 11, in dem gemäß insbesondere den Fig. 2 bis 4 eine Werkstückaufnahme 12 einerseits und wenigstens eine, im vorliegenden Ausführungsbeispiel zwei Werkzeugaufnahmen 13, 13' andererseits einander gegenüberliegen. Die Werkstückaufnahme 12 und die Werkzeugaufnahmen 13, 13' sind, wie noch näher beschrieben werden wird, relativ zueinander bewegbar, so dass wahlweise ein Bearbeitungsbereich 14 eines an der ersten Werkzeugaufnahme 13 um eine Drehachse A drehend antreibbar gehaltenen Polierwerkzeugs 15 oder ein Bearbeitungsbereich 14' eines an der weiteren Werkzeugaufnahme 13' drehend antreibbar gehaltenen, weiteren Polierwerkzeugs 15' mit einem an der Werkstückaufnahme 12 gehaltenen Werkstück (nicht gezeigt) in Bearbeitungseingriff gebracht und im Bearbeitungseingriff über das Werkstück geführt werden kann.

Außerhalb des Arbeitsraums 11, genauer gesagt vor einer wahlweise verschließbaren Öffnung 16, über die der Arbeitsraum 11 von außen zugänglich ist, ist zur Verschleißerkennung an den Polierwerkzeugen 15, 15' eine Sensoreinrichtung 17 vorgesehen, die im dargestellten Ausführungsbeispiel entsprechend der Anzahl der Polierwerkzeuge 15, 15' zwei berührungslos arbeitende Sensoranordnungen 18, 18' aufweist. Die erste Werkzeugaufnahme 13 mit dem daran gehaltenen Polierwerkzeug 15 und die weitere Werkzeugaufnahme 13' mit dem daran gehaltenen, weiteren Polierwerkzeug 15' sind in paralleler Anordnung bezüglich der Sensoreinrichtung 17 in eine in den Fig. 3 und 4 gezeigte Position bewegbar, in der die Verschleißerkennung an den Polierwerkzeugen 15, 15' mittels der Sensoreinrichtung 17 durchgeführt werden kann. Wesentlich ist, dass, wie nachfolgend ebenfalls noch im Detail erläutert werden wird, die Sensoranordnungen 18, 18' außerhalb des Arbeitsraums 11 von einer geschützten Ruheposition (Fig. 1, 2, 6 bis 8 und 10) in eine Erfassungsposition (Fig. 3 bis 5, 9, 11 und 12) bewegbar sind und umgekehrt, wobei die Sensoreinrichtung 17 angepasst ist, in der Erfassungsposition der Sensoranordnungen 18, 18' außerhalb des Arbeitsraums 11 durch die geöffnete Öffnung 16 des Arbeitsraums 11 hindurch an den Bearbeitungsbereichen 14, 14' der im Arbeitsraum 11 an den Werkzeugaufnahmen 13, 13' gehaltenen Polierwerkzeuge 15, 15' eine unzulässige Abweichung des jeweiligen Bearbeitungsbereichs 14, 14' von einer Sollgeometrie zu erfassen.

Bevor die Sensoreinrichtung 17 weiter beschrieben wird, sollen zunächst anhand der Fig. 1 bis 4 Aufbau und Funktion der Vorrichtung 10, insbesondere deren Kinematik näher erläutert werden: Gemäß den Fig. 2 bis 4 hat die Vorrichtung 10 eine in den Arbeitsraum 11 hineinragende Werkstückspindel 19, an deren freien Ende die Werkstückaufnahme 12 angebracht ist. Über die Werkstückspindel 19 kann ein zu polierendes Brillenglas (nicht gezeigt), welches üblicherweise mittels eines Blockmaterials an einem Blockstück zur Aufnahme in der Werkstückaufnahme 12 gehalten ist, um eine Werkstück-Drehachse C drehend angetrieben werden. Die Werkstückaufnahme 12 ist hierbei als Spannzange ausgeführt, die über einen nicht näher dargestellten Betätigungsmechanismus betätigt werden kann, um das auf dem Blockstück aufgeblockte Brillenglas axial fest und drehmitnahmefähig an der Werkstückspindel 19 zu spannen.

Ferner weist die Vorrichtung 10 zwei der Werkstückspindel 19 zugeordnet und gegenüberliegend in den Arbeitsraum 11 hineinragende Werkzeugspindeln 20, 20' auf, an deren freien Enden die Werkzeugaufnahmen 13, 13' jeweils mittels eines Faltenbalgs 21, 21' abgedichtet angebracht sind. Über die Werkzeugspindeln 20, 20' ist das an der jeweiligen Werkzeugaufnahme 13, 13' gehaltene Polierwerkzeug 15, 15' um eine Werkzeug-Drehachse A, A' drehend antreibbar und entlang der Werkzeug-Drehachse A, A' axial zustellbar (Zustellachsen Z, Z'), wie in den Fig. 2 bis 4 angedeutet.

Die Werkzeugspindeln 20, 20' sind ferner relativ zur Werkstückspindel 19 gemeinsam entlang einer im Wesentlichen senkrecht zu der Werkstück-Drehachse C verlaufenden Linearachse X bewegbar und um verschiedene Schwenk-Stellachsen B, B' verschwenkbar, die im Wesentlichen senkrecht zu der Werkstück-Drehachse C und im Wesentlichen senkrecht zu der Linearachse X verlaufen. Dabei sind die Werkzeugspindeln 20, 20' in Richtung der Linearachse X gesehen hintereinander angeordnet, wie am besten in den Fig. 1 und 3 zu sehen ist.

Gemäß insbesondere den Fig. 1 bis 3 ist der Arbeitsraum 11 der Vorrichtung 10 von einem die einzelnen Teile und Baugruppen der Vorrichtung 10 tragenden Rahmen 22 umgeben, der z.B. als Schweißkonstruktion aus Stahlteilen ausgeführt sein kann. Nach oben ist der Arbeitsraum 11 durch eine faltenbalgartige Arbeitsraumabdeckung 23 abdeckbar, nach vorne im Bereich der Öffnung 16 durch eine Schiebetür 24 mit transparentem Fenster verschließbar, wie in den Fig. 1 und 4 gezeigt ist. Zum Öffnen des Arbeitsraums 11 für einen Zugriff von außen kann die seitlich geeignet geführte Arbeitsraumabdeckung 23 mittels eines Pneumatikzylinders 25 (in Fig. 2 weggelassen) verschoben bzw. zurückgezogen werden. Auch für die Auf- bzw. Abbewegung der seitlich geführten Schiebetür 24 zum Verschließen (Fig. 1) oder Freigeben (Fig. 4) der Öffnung 16 zum Arbeitsraum 11 ist gemäß den Fig. 1 und 4 ein Pneumatikzylinder 26 vorgesehen (in den Fig. 2 und 3 weggelassen), der geeignet zwischen der Schiebetür 24 und dem Rahmen 22 angelenkt ist. Nach unten ist der Arbeitsraum 11 durch eine aus einem Kunststoffmaterial einstückig tiefgezogene, geeignet am Rahmen 22 befestigte Wanne 27 (nur in Fig. 1 gezeigt) mit stufenfreien Wandflächen, einer Ablauföffnung am tiefsten Punkt sowie einer abgedichteten Aufnahmeöffnung für die Werkstückspindel 19 begrenzt, durch die sich die Werkstückspindel 19 von unten hindurch erstreckt, um in einen unteren Bereich des Arbeitsraums 11 hineinzuragen.

Wie insbesondere in den Fig. 2 bis 4 zu erkennen ist, weist der Rahmen 22 eine Bodenplatte 28 auf, an der die Werkstückspindel 19 unterhalb der Aufnahmeöffnung in der Wanne 27 von oben angeflanscht ist. Mit dem Bezugszeichen 29 ist in den Fig. 3 und 4 ein unterhalb der Bodenplatte 28 befestigter Pneumatikzylinder für den vorerwähnten Betätigungsmechanismus beziffert, mittels dessen die als Spannzange ausgebildete Werkstückaufnahme 12 auf an sich bekannte Weise geöffnet bzw. geschlossen werden kann. Wie in den Fig. 1, 3 und 4 auch zu erkennen ist, ist ein Drehantrieb 30 - im dargestellten Ausführungsbeispiel ein drehzahlgesteuerter Asynchron-Drehstrommotor - von unten an der Bodenplatte 28 angeflanscht. Ebenfalls unterhalb der Bodenplatte 28 ist der Drehantrieb 30 bei dem Bezugszeichen 31 in Fig. 3 mittels eines Zahnriementriebs mit der wälzgelagerten Spindelwelle der Werkstückspindel 19 antriebsverbunden, so dass der Drehantrieb 30 die Werkstückspindel 19 mit vorbestimmter Drehzahl und Drehrichtung drehend anzutreiben vermag (Werkstück-Drehachse C).

Oberhalb der Werkstückspindel 19 ist für die gemeinsame Bewegung der Werkzeugspindeln 20, 20' ein Werkzeugschlitten 32 vorgesehen, der entlang der Linearachse X antreibbar bezüglich des Rahmens 22 geführt ist. Genauer gesagt ist zum Bewegen und Positionieren des an zwei parallelen, mit dem Rahmen 22 auf gegenüberliegenden Seiten verbundenen Führungsstangen 33, 34 geführten Werkzeugschlittens 32 ein am Rahmen 22 ortsfest montierter Drehantrieb 35 vorgesehen, der mit einem Kugelgewindetrieb 36 antriebsverbunden ist. Letzterer weist eine an beiden Enden drehbar gelagerte, axialfeste Kugelrollspindel 37 auf, die mit einer drehfest mit dem Werkzeugschlitten 32 verbundenen Mutter 38 eingreift. Hierbei ist der Werkzeugschlitten 32 gemäß den Fig. 2 und 4 an der einen Führungsstange 33 lediglich über ein Axiallager 39 (Kugelbuchse) geführt, während er an der anderen Führungsstange 34 über zwei in Richtung der Führungsstange 34 axial voneinander beabstandete Axiallager 40 (Kugelbuchsen) geführt ist, von denen in den Fig. 1 und 2 lediglich das vordere Axiallager 40 zu sehen ist. Bei dem Drehantrieb 35 zum Bewegen des Werkzeugschlittens 32 handelt es sich um einen Servomotor, der z.B. über eine Metallbalgkupplung 41 mit der Kugelrollspindel 37 verbunden ist. Die so aufgebaute, im Wesentlichen horizontal verlaufende Linearachse X ist CNC-lagegeregelt; zur Vereinfachung der Darstellung ist das zugehörige Wegmesssystem jedoch nicht gezeigt.

Wie am besten in den Fig. 1 und 2 zu erkennen ist, ist der Werkzeugschlitten 32 als Rahmenkonstruktion ausgebildet, mit einer in einer Draufsicht gesehen im Wesentlichen rechteckigen, inneren Öffnung 42 zur Aufnahme der beiden schwenkbaren Werkzeugspindeln 20, 20'. Hierbei ist die eine, vordere Werkzeugspindel 20 an bzw. in einem vorderen Schwenkjoch 43 montiert, das um die eine Schwenk-Stellachse B definiert verschwenkbar zu beiden Seiten der Öffnung 42 an dem Werkzeugschlitten 32 angelenkt ist, während die andere Werkzeugspindel 20' an einem hinteren Schwenkjoch 44 montiert ist, welches hinter dem vorderen Schwenkjoch 43 um die andere Schwenk-Stellachse B' definiert verschwenkbar an dem Werkzeugschlitten 32 angelenkt ist, und zwar erneut zu beiden Seiten der Öffnung 42. Die entsprechenden, auf beiden Seiten der Öffnung 42 vorhandenen, schlittenseitigen bzw. jochseitigen Lagerstellen sind in den Figuren nicht zu sehen. Zur Höhe der Lagerstellen am Werkzeugschlitten 32 ist zu sagen, dass die beiden Schwenk-Stellachsen B, B' in einer gedachten Ebene liegen, die sich entlang der Linearachse X bzw. parallel dazu erstreckt.

Für den Antrieb der Schwenkjoche 43, 44, d.h. zum definierten gemeinsamen Verschwenken beider Werkzeugspindeln 20, 20' um die Schwenk-Stellachsen B, B' ist ein weiterer Linearantrieb 45 vorgesehen. Der Linearantrieb 45 ist mit seinem einen Ende an dem vorderen Schwenkjoch 43 mit Abstand zur entsprechenden Schwenk-Stellachse B und mit seinem anderen Ende an dem Werkzeugschlitten 32 angelenkt. Genauer gesagt handelt es sich im dargestellten Ausführungsbeispiel bei dem Linearantrieb 45 um einen handelsüblichen, sogenannten "Elektrozylinder", mit einer Betätigungsstange 46, die über einen Drehantrieb 47 und ein Getriebe 48 bei entsprechender Bestromung des Drehantriebs 47 ein- bzw. ausgefahren werden kann. Wird der Drehantrieb 47 nicht bestromt, liegt im Getriebe 48 Selbsthemmung vor, d.h. die Betätigungsstange 46 verbleibt bei - nicht übermäßigen - äußeren Kräften in ihrer jeweiligen Ausfahrstellung; ein integriertes Messsystem kann die jeweilige Position der Betätigungsstange 46 zurückmelden. Dieser Linearantrieb 45 ist an seinem antriebsseitigen Ende an einer am Werkzeugschlitten 32 montierten Haltegabel 49 verschwenkbar gelagert, während am anderen Ende des Linearantriebs 45 die Betätigungsstange 46 an einem gabelförmigen Schwenkarm 50 verschwenkbar angreift, der an dem vorderen Schwenkjoch 43 befestigt ist. Zur Übertragung der so bewirkten Schwenkbewegung von dem vorderen Schwenkjoch 43 auf das hintere Schwenkjoch 44 sind die beiden Schwenkjoche 43, 44 über eine Koppelstange 51 antriebsverbunden, die von den Schwenk-Stellachsen B, B' beabstandet, nämlich oberhalb der Schwenk-Stellachsen B, B' mit ihrem einen Ende an dem vorderen Schwenkjoch 43 (Lagerstelle 52 in den Fig. 2 und 4) und mit ihrem anderen Ende an dem hinteren Schwenkjoch 44 (Lagerstelle 53 in den Fig. 2 und 4) angelenkt ist.

Insoweit ist ersichtlich, dass bei der wie oben beschrieben ausgebildeten Gelenkkette ein definiertes axiales Aus- bzw. Einfahren der Betätigungsstange 46 des Linearantriebs 45 dazu führt, dass die Schwenkjoche 43, 44 in definierter Weise um die Schwenk-Stellachsen B, B' verschwenkt werden, wodurch die zentrisch im jeweiligen Schwenkjoch 43 bzw. 44 angeordneten Werkzeugspindeln 20, 20' - in stets paralleler Ausrichtung zueinander - verschwenkt werden.

Weitere Einzelheiten zu möglichen Werkzeugspindeln 20, 20' sind den Druckschriften DE 10 2014 015 053 A1 und DE 10 2016 004 328 A1 zu entnehmen, auf die hinsichtlich Aufbau und Funktion der Werkzeugspindeln 20, 20' hiermit ausdrücklich Bezug genommen wird. Festgehalten sei an dieser Stelle lediglich, dass die die Werkzeugaufnahmen 13, 13' tragenden Spindelwellen (in den Figuren durch die Faltenbälge 21, 21' verdeckt) der Werkzeugspindeln 20, 20' zu einer gegebenen Zeit durch Elektromotoren 54, 54', die an den Schwenkjochen 43, 44 angeflanscht sind, unabhängig voneinander in Drehzahl und Drehrichtung steuerbar um die Werkzeug-Drehachsen A, A' drehend antreibbar sind und/oder unabhängig voneinander entlang der Werkzeug-Drehachsen A, A', ggf. auch sehr feinfühlig zustellbar sind (Zustellachsen Z, Z'). Dabei kann die eingefahrene Position der jeweiligen Spindelwelle - und damit die obere Position des entsprechenden Polierwerkzeugs 15, 15' - mittels eines Magnetsensors 55, 55' erkannt werden.

Was schließlich die an den Werkzeugaufnahmen 13, 13' gehaltenen Polierwerkzeuge 15, 15' angeht, sei an dieser Stelle auf die Druckschrift DE 10 2014 015 052 A1 verwiesen, auf die hiermit hinsichtlich Aufbau und Funktion der Polierwerkzeuge 15, 15' ausdrücklich Bezug genommen wird.

Die verschiedenen, mit der vorbeschriebenen Kinematik der Vorrichtung 10 durchführbaren Polierprozesse - bei denen im Übrigen ein flüssiges Poliermittel über an der Werkstückspindel 19 vorgesehene Poliermitteldüsen 56 (siehe die Fig. 3 und 4, in denen solche exemplarisch für mehrere am Umfang der Werkstückspindel 19 verteilte Düsen dargestellt ist) an die Eingriffsstelle zwischen Werkzeug und Werkstück zugeführt wird - sind dem Fachmann hinlänglich bekannt und sollen daher an dieser Stelle nicht näher beschrieben werden.

Aufbau und Funktion der Sensoreinrichtung 17 mit ihren Sensoranordnungen 18, 18' sollen nunmehr insbesondere anhand der Fig. 5 bis 17 weiter erläutert werden. Wie zunächst am besten der Fig. 9 bis 12 zu entnehmen ist, weist die Sensoreinrichtung 17 einen im Wesentlichen quaderförmigen Grundrahmen 57 als mechanische Basis auf. Gemäß den Fig. 2 und 3 ist der Grundrahmen 57 der Sensoreinrichtung 17 an einem freien Schenkelende eines Halterahmens 58 befestigt, der in einer Seitenansicht gesehen winkelförmig ist. Dabei liegt der Grundrahmen 57 mit seiner im Wesentlichen horizontal verlaufenden Unterseite auf dem gleichermaßen horizontal verlaufenden unteren Schenkel des Halterahmens 58 auf. Der andere, im Wesentlichen vertikal verlaufende Schenkel des Halterahmens 58 ist direkt an dem tragenden Rahmen 22 der Vorrichtung 10 montiert, welcher den Arbeitsraum 11 umgibt, wodurch der Grundrahmen 57 der Sensoreinrichtung 17 ortsfest angebracht ist. Hierdurch ergibt sich eine feste Lagebeziehung der Sensoreinrichtung 17 zu den bewegten Komponenten (Werkzeugschlitten 32, Schwenkjoche 43, 44, Werkzeugspindeln 20, 20' mit Werkzeugaufnahmen 13, 13') der Vorrichtung 10, die ebenfalls an bzw. auf dem Rahmen 22 montiert sind. Zur festen Verbindung des Grundrahmens 57 der Sensoreinrichtung 17, des Halterahmen 58 und des Rahmens 22 der Vorrichtung 10 sind Befestigungsschrauben vorgesehen, die in den Figuren zur Vereinfachung der Darstellung nicht gezeigt sind.

Ferner besitzt die Sensoreinrichtung 17 einen Sensorhalter 59, der in den Fig. 13 bis 17 als Einzelteil dargestellt ist. An bzw. auf dem Sensorhalter 59 sind die Sensoranordnungen 18, 18' auf noch zu beschreibende Weise befestigt. Der Sensorhalter 59 ist bezüglich des Grundrahmens 57 der Sensoreinrichtung 17 linear verschiebbar, um die Sensoranordnungen 18, 18' von ihrer geschützten Ruheposition in die Erfassungsposition und umgekehrt zu bewegen. In den Figuren ist diese Linearbewegung der Sensoranordnungen 18, 18' durch den Pfeil S angedeutet.

Zur Führung des Sensorhalters 59 gegenüber dem Grundrahmen 57 bei der Linearbewegung S ist eine handelsübliche Linearführung 60 vorgesehen, die am besten in den Fig. 8 bis 10 und 12 zu erkennen ist. Die Linearführung 60 umfasst einen in einer im Wesentlichen mittigen Aussparung des Grundrahmens 57 angebrachten Führungswagen 61, in dem eine Führungsschiene 62 läuft. Die Führungsschiene 62 ist an dem Sensorhalter 59 montiert. Zur Montage des Führungswagens 61 am Grundrahmen 57 und der Führungsschiene 62 am Sensorhalter 59 sind Befestigungsschrauben 63 bzw. 64 vorgesehen, wie insbesondere die Fig. 8 und 10 zeigen.

Gemäß insbesondere den Fig. 8 bis 10 verläuft die Aussparung zur Aufnahme des Führungswagens 61 im Grundrahmen 57 bezüglich der Höhenrichtung z der Vorrichtung 10 schräg, so dass bei einem über die Linearführung 60 geführten Ausfahren der an dem Sensorhalter 59 befestigten Sensoranordnungen 18, 18' (Linearbewegung S) sich die Sensoranordnungen 18, 18' nicht nur in der Höhenrichtung z bewegen, sondern zugleich auch entgegen der Längenrichtung x, d.h. schräg auf die Öffnung 16 zum Arbeitsraum 11 zu, so dass sich die aus ihrer Ruheposition weg bewegenden Sensoranordnungen 18, 18' tendenziell den zu erfassenden Bearbeitungsbereichen 14, 14' der Polierwerkzeuge 15, 15' nähern und diesen in der Erfassungsposition der Sensoranordnungen 18, 18' auf der Sensorseite maximal angenähert sind.

Insbesondere die Fig. 5, 7, 9 und 12 zeigen ferner, dass die Sensoreinrichtung 17 einen mit dem Sensorhalter 59 antriebsverbundenen Linearantrieb 65 aufweist, der in Fig. 10 nicht dargestellt ist, um den Blick auf den Sensorhalter 59 freizugeben. Bei dem Linearantrieb handelt es sich im dargestellten Ausführungsbeispiel um einen Pneumatikzylinder 65, der betätigungswirksam zwischen dem Grundrahmen 57 und dem Sensorhalter 59 montiert ist. Genauer gesagt ist der Pneumatikzylinder 65 gemäß der Schnittansicht nach Fig. 7 und der Draufsicht gemäß Fig. 12 an einem zugeordneten Befestigungsflansch 66 des Grundrahmens 57 angeflanscht, so dass sich eine Kolbenstange 67 des Pneumatikzylinders 65 durch eine zentrale Öffnung 68 im Befestigungsflansch 66 hindurch erstreckt. Flanschschrauben zur Befestigung des Pneumatikzylinders 65 am Befestigungsflansch 66 sind in den Fig. 6, 9 und 12 mit dem Bezugszeichen 69 beziffert. Zur Antriebsverbindung mit dem Sensorhalter 59 ist das freie Ende der Kolbenstange 67 mittels einer Befestigungsschraube 70 an einem Mitnehmerabschnitt 71 des Sensorhalters 59 befestigt, wie am besten in den Fig. 7 und 12 zu erkennen ist.

Was die Endlagen der Linearbewegung S der Sensoranordnungen 18, 18' angeht, ist die Ruheposition der Sensoranordnungen 18, 18' dadurch definiert, dass der Mitnehmerabschnitt 71 des Sensorhalters 59 bei einer Einfahrbewegung S der Sensoranordnungen 18, 18' von oben an dem Befestigungsflansch 66 für den Pneumatikzylinder 65 zur Anlage gelangt. Dieser Zustand ist in Fig. 7 dargestellt. Die ausgefahrene Erfassungsposition der Sensoranordnungen 18, 18' hingegen ist durch einen handelsüblichen Stoßdämpfer 72 festgelegt. Der Stoßdämpfer 72 ist mittels einer Überwurfmutter 73 an einem Stoßdämpferflansch 74 des Grundrahmens 57 befestigt, wie in den Fig. 9, 11 und 12 gezeigt, so dass ein Stoßdämpferstößel 75 auf der von der Überwurfmutter 73 abgewandten Seite des Stoßdämpferflanschs 74 nach unten zeigt, wie in Fig. 10 zu sehen ist. Ferner ist der Sensorhalter 59 mit einem Anschlagabschnitt 76 versehen, der beim Ausfahren des Sensorhalters 59 am Stoßdämpferstößel 75 zur Anlage kommen kann. Es ist ersichtlich, dass der Stoßdämpfer 72 somit betätigungswirksam zwischen dem Grundrahmen 57 und dem Sensorhalter 59 angeordnet ist, wobei er die Linearverschiebung S des Sensorhalters 59 relativ zum Grundrahmen 57 begrenzt und damit die Erfassungsposition der Sensoranordnungen 18, 18' definiert.

Wie des Weiteren die Fig. 1 und 6 zeigen, sitzt die Sensoreinrichtung 17 in einer Öffnung einer hier abgebrochen dargestellten Blechabdeckung 77 vor der in Fig. 1 mittels der Schiebetür 24 verschlossenen Öffnung 16 zum Arbeitsraum 11, wobei ein Einbaurahmen 78 gegenüber der Blechabdeckung 77 abdichtet. Ein in bzw. unter der Blechabdeckung 77 gebildeter Aufnahmeraum 79 ist in einem oberen Bereich zu den Seiten von dem Grundrahmen 57 und einem daran geeignet befestigten, in einer Draufsicht gesehen im Wesentlichen rechteckigen Dichtrahmen 80 begrenzt. Der Dichtrahmen 80 ist im dargestellten Ausführungsbeispiel gemäß insbesondere den Fig. 7 und 8 an seiner Oberseite mit einer umlaufenden Nut 81 versehen, in der eine Dichtung 82 - hier in der Form eines elastomeren Dichtprofils - eingeknüpft ist, das den Aufnahmeraum 79 umgibt, wie die Fig. 5 und 6 zeigen.

Wie ferner den Fig. 1, 2, 7 und 8 zu entnehmen ist, sind die die Sensoranordnungen 18, 18' in ihrer geschützten Ruheposition mittels einer Abdeckung 83 der Sensoreinrichtung 17 gegenüber der Umgebung abgedichtet abgedeckt. Die Abdeckung 83 der Sensoreinrichtung 17 umfasst eine Klappe 84, die an einem Rand 85 gelagert ist, und zwar an einem von der Öffnung 16 zum Arbeitsraum 11 abgewandten Rand 85, so dass die Klappe 84 um eine Schwenkachse K von einer der Ruheposition der Sensoranordnungen 18, 18' zugeordneten Schließstellung (vgl. die Fig. 1, 2, 6 [aufgebrochen dargestellt], 7 und 8) in eine der Erfassungsposition der Sensoranordnungen 18, 18' zugeordnete Öffnungsstellung (siehe die Fig. 3 bis 5) und umgekehrt verschwenkbar ist. Hierbei wirkt die Klappe 84 in ihrer Schließstellung gemäß den Fig. 7 und 8 mit der ortsfest angebrachten, um die Sensoreinrichtung 17 umlaufenden Dichtung 82 zusammen, um die Sensoreinrichtung 17 gegenüber der Umgebung abzudichten.

Zur schwenkbaren Anlenkung der Klappe 84 sind am Rand 85 zu beiden Seiten der Klappe 84 Lagerklötze 86 am Grundrahmen 57 befestigt, mit denen die Klappe 84 über Lagerstifte 87 bezüglich des Grundrahmen 57 um die Schwenkachse K verschwenkbar verbunden ist. Im dargestellten Ausführungsbeispiel hat die Klappe 84 keine Handhabe und auch keinen eigenen Antrieb, ist vielmehr nach Maßgabe einer Verschiebung des Sensorhalters 59 relativ zum Grundrahmen 57 um die Schwenkachse K verschwenkbar. Hierbei greift der Sensorhalter 59 über einen drehbar gelagerten Wälzkörper 88 an der Klappe 84 an, wie insbesondere die Fig. 5, 7 und 8 zeigen. Genauer gesagt ist der Sensorhalter 59 in einem oberen Bereich mit zwei Lageraugen 89 versehen, zwischen denen der Wälzkörper 88 in Form einer Rolle mittels einer Achse 90 gelagert ist. Es ist ersichtlich, dass der Wälzkörper 88 bei einem Ausfahren des Sensorhalters 59 auf einer Unterseite der Klappe 84 abrollt und dabei die Klappe 84 verschleißarm um die Schwenkachse K hochschwenkt.

Zur Erzielung einer möglichst dichten Schließstellung der Klappe 84 und für eine Unterstützung einer der Einfahrbewegung des Sensorhalters 59 leicht folgenden Schließbewegung der Klappe 84 ist die Klappe 84 in die Schließstellung federvorgespannt. Dies ist im dargestellten Ausführungsbeispiel mit Hilfe von zwei Schraubenzugfedern 91 realisiert. Die Schraubenzugfedern 91 sind klappenseitig zu beiden Seiten der Klappe 84 nahe den Lagerklötzen 86 mit jeweils einem Ende in zugeordneten Ösen 92 an der Unterseite der Klappe 84 eingehängt. Auf der Seite des Grundrahmens 57 hingegen greifen die Schraubenzugfedern 91 mit ihrem jeweils anderen Ende in zugeordneten, am Grundrahmen 57 befestigten Ösen 93 ein, wie insbesondere in den Fig. 3 und 5 zu sehen ist.

Zur Klappe 84 ist ferner noch anzumerken, dass die Klappe 84 mit einem ortsfest montierten, vorzugsweise induktiv arbeitenden Näherungsschalter 94 zusammenwirkt, der angepasst ist, die Schließstellung der Klappe 84 und damit die Ruheposition der Sensoranordnungen 18, 18' zu detektieren. Hierfür ist die Klappe 84 wenigstens in einem Teilbereich metallisch ausgebildet. Eine logische Verknüpfung besteht dabei darin, dass, wenn die Klappe 84 sich in ihrer Schließstellung befindet, der Sensorhalter 59 eingefahren sein muss. Damit ist sichergestellt, dass sich die Sensoranordnungen 18, 18' bei Erfassung dieses Schaltersignals tatsächlich in ihrer unter der Klappe 84 geschützten Ruheposition befinden, und nicht etwa die Klappe 84 aufsteht. Die Fig. 5 und 6 zeigen diesen Näherungsschalter 94, der in einer Ecke des Dichtrahmens 80 angebracht ist. Auch die ausgefahrene Erfassungsposition der Sensoranordnungen 18, 18' kann detektiert werden, und zwar über einen entsprechenden Sensor, der an geeigneter Position des Pneumatikzylinders 65 montiert, in den Figuren aber nicht gezeigt ist.

Wie oben schon angesprochen, umfasst die Sensoreinrichtung 17 im dargestellten Ausführungsbeispiel zwei Sensoranordnungen 18, 18', die jeweils einer Werkzeugaufnahme 13, 13' im Arbeitsraum 11 zugeordnet sind. Hierbei sind die Sensoranordnungen 18, 18' identisch ausgebildet, und zwar umfasst jede Sensoranordnung 18, 18' einen Laser 95, 95' und einen Lichtschnittsensor 96, 96', wie in den Fig. 9 und 12 schematisch gezeigt ist. Wie ferner in den Fig. 9, 11 und 12 durch gestrichelte Linien für ein vom jeweiligen Laser 95, 95' emittiertes Laserlichtband und durch gepunktete Linien für einen Erfassungsbereich des jeweiligen Lichtschnittsensors 96, 96' angedeutet ist, ist mittels des jeweiligen Lichtschnittsensor 96, 96' eine von dem entsprechenden Laser 95, 95' auf dem Bearbeitungsbereich 14, 14' des zugeordneten Werkzeugs 15, 15' abbildbare Laserlinie 97, 97' über ein Triangulationsverfahren detektierbar, woraus Höhen- und Breiteninformationen gewonnen werden können. Derartige Sensoranordnungen sind beispielsweise von der Firma Pepperl+Fuchs GmbH, Mannheim, Deutschland im Handel erhältlich.

Mit diesem Vorgehen wird eine Kontur auf dem jeweiligen Bearbeitungsbereich 14, 14' des Polierwerkzeugs 15, 15' erfasst. Ergibt ein Vergleich der erfassten Ist-Kontur, hier von dem Bearbeitungsbereich 14, 14' eines bereits benutzten Polierwerkzeugs 15, 15', mit einer Referenz- oder Soll-Kontur, hier von dem Bearbeitungsbereich 14, 14' eines vorher eingelernten, neuen Polierwerkzeugs 15, 15', eine Abweichung, ist zu entscheiden, ob die Abweichung noch innerhalb zulässiger Grenzen, d.h. der Toleranz liegt. Liegt die Abweichung noch innerhalb der Toleranz, so kann das Polierwerkzeug 15, 15' noch verwendet werden, andernfalls ist das Polierwerkzeug 15, 15' zu ersetzen.

Eine strukturelle Besonderheit besteht im vorliegenden Fall auch darin, dass infolge (1.) der Hintereinanderanordnung der zu kontrollierenden Polierwerkzeuge 15, 15', (2.) dem messtechnischen Wunsch, zur Erzielung vergleichbarer Erfassungsergebnisse die Abstände zwischen den Sensoranordnungen 18, 18' und den jeweils zu detektierenden Bearbeitungsbereichen 14, 14' an den Polierwerkzeugen 15, 15' möglichst gleich zu halten, (3.) dem messtechnischen Erfordernis, gemäß dem sich die emittierten Laserlichtbänder nicht kreuzen dürfen, und (4.) des Vorhandenseins der die Öffnung 16 zum Arbeitsraum 11 begrenzenden Teile der Vorrichtung 10 (Schiebetür 24 nach unten, Dichtung an der oberen Arbeitsraumabdeckung 23 nach oben), wie in Fig. 11 angedeutet, der für die Verschleißerkennung effektiv nutzbare "Durchblickbereich" der Öffnung 16 tatsächlich nur sehr klein ist.

Diese Thematik wird im vorliegenden Ausführungsbeispiel schließlich dadurch adressiert, dass der Sensorhalter 59 der Sensoreinrichtung 17 an einem Halterkopf 98 zwei Montageflächen 99, 99' für jeweils eine der Sensoranordnungen 18, 18' aufweist, die (1.) in keilförmiger Anordnung einen spitzen Winkel α miteinander einschließen, wie in den Fig. 7, 8 und 16 eingezeichnet, (2.) bezüglich einer Längsachse des Sensorhalters 59 einen Querversatz Q zueinander besitzen, wie in Fig. 15 dargestellt, und schließlich (3.) mit - hier seitlich offenen - Langlöchern 100, 100' versehen sind, die auf den Montageflächen 99, 99' eine relativ zueinander verdrehte Montage der Sensoranordnungen 18, 18' gestatten. Dies ermöglicht eine sehr enge, den obigen Anforderungen genügende (Schraub)Montage der Sensoranordnungen 18, 18' am Halterkopf 98, bei der gemäß z.B. Fig. 9 die untere Sensoranordnung 18 schräg auf das obere Polierwerkzeug 15 "schaut", während die obere Sensoranordnung 18' schrägt auf das untere Polierwerkzeug 15' "blickt".

Der eigentliche Vorgang der Verschleißerkennung kann nun wie folgt ablaufen, wobei an dieser Stelle auf eine ausführliche Darstellung verzichtet werden soll, wie die Polierwerkzeuge 15, 15' die vorgeschwenkte Stellung gemäß z.B. den Fig. 3 und 4 erreichen und die Sensoreinrichtung 17 in ihren geöffneten Erfassungszustand gelangt, in dem ihre Sensoranordnungen 18, 18' den Bearbeitungsbereichen 14, 14' der Polierwerkzeuge 15, 15' durch die Öffnung 16 hindurch gegenüberliegen, weil dies aus der Vorbeschreibung für den Fachmann ersichtlich ist.

Nach einem Werkzeugwechsel muss das neue Polierwerkzeug 15, 15' zunächst eingelernt werden, d.h. die Kontur des Bearbeitungsbereichs 14, 14' muss als "Soll-Kurve" abgespeichert werden. Dies geschieht auf der 0° Drehposition des Polierwerkzeugs 15, 15' (Drehachse A, A'). Da das Polierwerkzeug 15, 15' rotationssymmetrisch ist, wird davon ausgegangen, dass ein einzelner Einlernvorgang als Referenz ausreicht. Optional kann, analog zum Messvorgang, der nachfolgend noch beschrieben wird, schrittweise auf mehreren Drehpositionen eingelernt werden. Als Alternative kann auch, eine hohe Fertigungswiederholgenauigkeit der Polierwerkzeuge 15, 15' vorausgesetzt, eine Standard-Kontur für jede Werkzeugsorte hinterlegt werden, wodurch der Einlernvorgang nach dem Werkzeugwechsel entfallen könnte.

Die beim Einlernvorgang ermittelte Kontur wird bei allen folgenden Messungen als Referenz verwendet, mit der die Messkonturen verglichen werden.

Werden bei einer Messung eine oder mehrere von definierten Qualitätsschwellen unterschritten, so liefert die Sensoreinrichtung 17 das Messergebnis "Schlecht" für diese Messung. Jede Einzelmessung erfasst dabei nur einen Schnitt über das Polierwerkzeug 15, 15' auf einer Achslage. Um den gesamten Bearbeitungsbereich 14, 14' zu prüfen, dreht sich das Polierwerkzeug 15, 15' in einstellbar definierten Schritten (1°, 2°, 5°, 10°) um seine Rotationsachse A bzw. A'. Nach jedem Schritt erfolgt eine erneute Messung. Da ein einzelnes Unterschreiten einer der Schwellen auf einer Achslage nicht zwangsläufig einen Werkzeugwechsel erfordert, wird für die Beurteilung des Gesamtzustandes eine definierte Anzahl von Messergebnissen "Schlecht" noch akzeptiert. Abhängig von Häufigkeit und Verteilung der "Schlecht"-Ergebnisse über den gesamten Bearbeitungsbereich 14, 14' wird schließlich entschieden, ob das Polierwerkzeug 15, 15' in einwandfreiem, akzeptablem oder schlechtem Zustand ist.

Eine Vorrichtung zur Bearbeitung von insbesondere Brillengläsern hat einen über eine wahlweise verschließbare Öffnung von außen zugänglichen Arbeitsraum, in dem eine Werkstückaufnahme und wenigstens eine Werkzeugaufnahme einander gegenüberliegen und relativ zueinander bewegbar sind, so dass ein Bearbeitungsbereich eines an der Werkzeugaufnahme gehaltenen Werkzeugs mit einem an der Werkstückaufnahme gehaltenen Werkstück in Bearbeitungseingriff bringbar und im Bearbeitungseingriff über das Werkstück führbar ist. Zur Verschleißerkennung an dem Werkzeug ist eine Sensoreinrichtung mit wenigstens einer berührungslos arbeitenden Sensoranordnung vorgesehen, die außerhalb des Arbeitsraums von einer geschützten Ruheposition in eine Erfassungsposition bewegbar ist und umgekehrt. Die Sensoreinrichtung ist angepasst, in der Erfassungsposition der Sensoranordnung durch die geöffnete Öffnung des Arbeitsraums hindurch an dem Bearbeitungsbereich des an der Werkzeugaufnahme gehaltenen Werkzeugs eine unzulässige Abweichung des Bearbeitungsbereichs von einer Sollgeometrie zu erfassen.

### BEZUGSZEICHENLISTE

- 10: Vorrichtung
- 11: Arbeitsraum
- 12: Werkstückaufnahme
- 13, 13': Werkzeugaufnahme
- 14, 14': Bearbeitungsbereich
- 15, 15': Polierwerkzeug
- 16: Öffnung
- 17: Sensoreinrichtung
- 18, 18': Sensoranordnung
- 19: Werkstückspindel
- 20, 20': Werkzeugspindel
- 21, 21': Faltenbalg
- 22: Rahmen
- 23: Arbeitsraumabdeckung
- 24: Schiebetür
- 25: Pneumatikzylinder
- 26: Pneumatikzylinder
- 27: Wanne
- 28: Bodenplatte
- 29: Pneumatikzylinder
- 30: Drehantrieb
- 31: Zahnriementrieb
- 32: Werkzeugschlitten
- 33: Führungsstange
- 34: Führungsstange
- 35: Drehantrieb
- 36: Kugelgewindetrieb
- 37: Kugelrollspindel
- 38: Mutter
- 39: Axiallager
- 40: Axiallager
- 41: Metallbalgkupplung
- 42: Öffnung
- 43: Schwenkjoch
- 44: Schwenkjoch
- 45: Linearantrieb
- 46: Betätigungsstange
- 47: Drehantrieb
- 48: Getriebe
- 49: Haltegabel
- 50: Schwenkarm
- 51: Koppelstange
- 52: Lagerstelle
- 53: Lagerstelle
- 54, 54': Elektromotor
- 55, 55': Magnetsensor
- 56: Poliermitteldüse
- 57: Grundrahmen
- 58: Halterahmen
- 59: Sensorhalter
- 60: Linearführung
- 61: Führungswagen
- 62: Führungsschiene
- 63: Befestigungsschraube
- 64: Befestigungsschraube
- 65: Linearantrieb / Pneumatikzylinder
- 66: Befestigungsflansch
- 67: Kolbenstange
- 68: Öffnung
- 69: Flanschschraube
- 70: Befestigungsschraube
- 71: Mitnehmerabschnitt
- 72: Stoßdämpfer
- 73: Überwurfmutter
- 74: Stoßdämpferflansch
- 75: Stoßdämpferstößel
- 76: Anschlagabschnitt
- 77: Blechabdeckung
- 78: Einbaurahmen
- 79: Aufnahmeraum
- 80: Dichtrahmen
- 81: Nut
- 82: Dichtung
- 83: Abdeckung
- 84: Klappe
- 85: Rand
- 86: Lagerklotz
- 87: Lagerstift
- 88: Wälzkörper
- 89: Lagerauge
- 90: Achse
- 91: Schraubenzugfeder
- 92: Öse
- 93: Öse
- 94: Näherungsschalter
- 95, 95': Laser
- 96, 96': Lichtschnittsensor
- 97, 97': Laserlinie
- 98: Halterkopf
- 99, 99': Montagefläche
- 100, 100': Langloch

- α: Winkel zwischen Sensormontageflächen

- x: Längenrichtung
- y: Breitenrichtung
- z: Höhenrichtung

- A: Drehachse vorderes Polierwerkzeug (drehzahlgesteuert)
- A': Drehachse hinteres Polierwerkzeug (drehzahlgesteuert)
- B: Schwenk-Stellachse vorderes Polierwerkzeug
- B': Schwenk-Stellachse hinteres Polierwerkzeug
- C: Werkstück-Drehachse (drehzahlgesteuert)
- K: Schwenkachse für Sensorklappe (ungesteuert)
- Q: Querversatz
- S: Linearbewegung der Sensoranordnungen (ungesteuert)
- X: Linearachse Werkzeugschlitten (lagegeregelt)
- Z: Zustellachse vorderes Polierwerkzeug (ungesteuert)
- Z': Zustellachse hinteres Polierwerkzeug (ungesteuert)

## Patentansprüche

1. Vorrichtung (10) zur Bearbeitung von optischen Werkstücken, insbesondere Brillengläsern, mit einem über eine wahlweise verschließbare Öffnung (16) von außen zugänglichen Arbeitsraum (11), in dem eine Werkstückaufnahme (12) und wenigstens eine Werkzeugaufnahme (13, 13') einander gegenüberliegen und relativ zueinander bewegbar sind, so dass ein Bearbeitungsbereich (14, 14') eines an der Werkzeugaufnahme (13, 13') gehaltenen Werkzeugs (15, 15') mit einem an der Werkstückaufnahme (12) gehaltenen Werkstück in Bearbeitungseingriff bringbar und im Bearbeitungseingriff über das Werkstück führbar ist, **dadurch gekennzeichnet, dass** eine Sensoreinrichtung (17) mit wenigstens einer berührungslos arbeitenden Sensoranordnung (18, 18') zur Verschleißerkennung an dem Werkzeug (15, 15') vorgesehen ist, die außerhalb des Arbeitsraums (11) von einer geschützten Ruheposition in eine Erfassungsposition bewegbar ist und umgekehrt, wobei die Sensoreinrichtung (17) angepasst ist, in der Erfassungsposition der Sensoranordnung (18, 18') durch die geöffnete Öffnung (16) des Arbeitsraums (11) hindurch an dem Bearbeitungsbereich (14, 14') des an der Werkzeugaufnahme (13, 13') gehaltenen Werkzeugs (15, 15') eine unzulässige Abweichung des Bearbeitungsbereichs (14, 14') von einer Sollgeometrie zu erfassen.

2. Vorrichtung (10) zur Bearbeitung von optischen Werkstücken nach Anspruch 1, **dadurch gekennzeichnet, dass** die wenigstens eine Sensoranordnung (18, 18') an einem Sensorhalter (59) der Sensoreinrichtung (17) montiert ist, der bezüglich eines ortsfest angebrachten Grundrahmens (57) der Sensoreinrichtung (17) linear verschiebbar ist, um die Sensoranordnung (18, 18') von der geschützten Ruheposition in die Erfassungsposition und umgekehrt zu bewegen.

3. Vorrichtung (10) zur Bearbeitung von optischen Werkstücken nach Anspruch 2, **dadurch gekennzeichnet, dass** der Sensorhalter (59) gegenüber dem Grundrahmen (57) mittels einer Linearführung (60) geführt ist, die einen am Grundrahmen (57) befestigten Führungswagen (61) und eine an dem Sensorhalter (59) montierte Führungsschiene (62) umfasst.

4. Vorrichtung (10) zur Bearbeitung von optischen Werkstücken nach Anspruch 2 oder 3, **dadurch gekennzeichnet, dass** die Sensoreinrichtung (17) einen mit dem Sensorhalter (59) antriebsverbundenen Linearantrieb (65) aufweist.

5. Vorrichtung (10) zur Bearbeitung von optischen Werkstücken nach Anspruch 4, **dadurch gekennzeichnet, dass** es sich bei dem Linearantrieb um einen Pneumatikzylinder (65) handelt, der betätigungswirksam zwischen dem Grundrahmen (57) und dem Sensorhalter (59) montiert ist.

6. Vorrichtung (10) nach einem der Ansprüche 2 bis 5, **dadurch gekennzeichnet, dass** zwischen dem Grundrahmen (57) und dem Sensorhalter (59) ein Stoßdämpfer (72) angeordnet ist, der die Linearverschiebung des Sensorhalters (59) relativ zum Grundrahmen (57) begrenzt und damit die Erfassungsposition der wenigstens einen Sensoranordnung (18, 18') definiert.

7. Vorrichtung (10) zur Bearbeitung von optischen Werkstücken nach einem der vorhergehenden Ansprüche, **dadurch gekennzeichnet, dass** die wenigstens eine Sensoranordnung (18, 18') in der geschützten Ruheposition mittels einer Abdeckung (83; der Sensoreinrichtung (17) gegenüber der Umgebung abgedichtet abgedeckt ist.

8. Vorrichtung (10) zur Bearbeitung von optischen Werkstücken nach Anspruch 7, **dadurch gekennzeichnet, dass** die Abdeckung (83) der Sensoreinrichtung (17) eine Klappe (84) umfasst, die an einem Rand (85) gelagert ist, so dass die Klappe (84) von einer der Ruheposition der wenigstens einen Sensoranordnung (18, 18') zugeordneten Schließstellung in eine der Erfassungsposition der wenigstens einen Sensoranordnung (18, 18') zugeordnete Öffnungsstellung und umgekehrt verschwenkbar ist.

9. Vorrichtung (10) zur Bearbeitung von optischen Werkstücken nach Anspruch 8, **dadurch gekennzeichnet, dass** die Klappe (84) in ihrer Schließstellung mit einer ortsfest angebrachten, um die Sensoreinrichtung (17) umlaufenden Dichtung (82) zusammenwirkt, um die Sensoreinrichtung (17) gegenüber der Umgebung abzudichten.

10. Vorrichtung (10) zur Bearbeitung von optischen Werkstücken nach wenigstens den Ansprüchen 2 und 8, **dadurch gekennzeichnet, dass** die Klappe (84) nach Maßgabe einer Verschiebung des Sensorhalters (59) relativ zum Grundrahmen (57) verschwenkbar ist.

11. Vorrichtung (10) zur Bearbeitung von optischen Werkstücken nach Anspruch 10, **dadurch gekennzeichnet, dass** der Sensorhalter (59) über einen drehbar gelagerten Wälzkörper (88) an der Klappe (84) angreift.

12. Vorrichtung (10) zur Bearbeitung von optischen Werkstücken nach einem der Ansprüche 8 bis 11, **dadurch gekennzeichnet, dass** die Klappe (84) in die Schließstellung federvorgespannt ist.

13. Vorrichtung (10) zur Bearbeitung von optischen Werkstücken nach einem der Ansprüche 8 bis 12, **dadurch gekennzeichnet, dass** die Klappe (84) mit einem ortsfest montierten Näherungsschalter (94) zusammenwirkt, der angepasst ist, die Schließstellung der Klappe (84) und damit die Ruheposition der wenigstens einen Sensoranordnung (18, 18') zu detektieren.

14. Vorrichtung (10) zur Bearbeitung von optischen Werkstücken nach einem der vorhergehenden Ansprüche, **gekennzeichnet durch** einen tragenden Rahmen (22), der den Arbeitsraum (11) umgibt, wobei die Sensoreinrichtung (17) über einen Halterahmen (58) direkt an dem Rahmen (22) der Vorrichtung (10) montiert ist.

15. Vorrichtung (10) zur Bearbeitung von optischen Werkstücken nach einem der vorhergehenden Ansprüche, **gekennzeichnet durch** eine der Werkstückaufnahme (12) gegenüberliegende, weitere Werkzeugaufnahme (13'), die im Arbeitsraum (11) relativ zur Werkstückaufnahme (12) bewegbar ist, so dass ein Bearbeitungsbereich (14') eines an der weiteren Werkzeugaufnahme (13') gehaltenen, weiteren Werkzeugs (15') mit einem an der Werkstückaufnahme (12) gehaltenen Werkstück in Bearbeitungseingriff bringbar und im Bearbeitungseingriff über das Werkstück führbar ist, wobei die weitere Werkzeugaufnahme (13') mit dem daran gehaltenen, weiteren Werkzeug (15') in paralleler Anordnung zu und gemeinsam mit der erstgenannten Werkzeugaufnahme (13) bezüglich der Sensoreinrichtung (17) in eine Prüfposition bewegbar ist, in der mittels der Sensoreinrichtung (17) die Verschleißerkennung durch die geöffnete Öffnung (16) des Arbeitsraums (11) hindurch durchführbar ist, und wobei die Sensoreinrichtung (17) zwei Sensoranordnungen (18, 18') umfasst, die jeweils einer Werkzeugaufnahme (13, 13') zugeordnet sind.

16. Vorrichtung (10) zur Bearbeitung von optischen Werkstücken nach Anspruch 15, **dadurch gekennzeichnet, dass** die zwei Sensoranordnungen (18, 18') identisch ausgebildet sind.

17. Vorrichtung (10) zur Bearbeitung von optischen Werkstücken nach wenigstens den Ansprüchen 2 und 15, **dadurch gekennzeichnet, dass** der Sensorhalter (59) der Sensoreinrichtung (17) an einem Halterkopf (98) zwei Montageflächen (99, 99') für jeweils eine der Sensoranordnungen (18, 18') aufweist, die in keilförmiger Anordnung einen spitzen Winkel (α) miteinander einschließen, bezüglich einer Längsachse des Sensorhalters (59) einen Querversatz (Q) zueinander besitzen und mit Langlöchern (100, 100') versehen sind, die auf den Montageflächen (99, 99') eine relativ zueinander verdrehte Montage der Sensoranordnungen (18, 18') gestatten.

18. Vorrichtung (10) zur Bearbeitung von optischen Werkstücken nach einem der vorhergehenden Ansprüche, **dadurch gekennzeichnet, dass** die wenigstens eine Sensoranordnung oder jede der Sensoranordnungen (18, 18') einen Laser (95, 95') und einen Lichtschnittsensor (96, 96') umfasst, wobei mittels des Lichtschnittsensors (96, 96') eine von dem Laser (95, 95') auf dem Bearbeitungsbereich (14, 14') des zugeordneten Werkzeugs (15, 15') abbildbare Laserlinie (97, 97') über ein Triangulationsverfahren detektierbar ist.

## Claims

1. Device (10) for processing optical workpieces, particularly spectacle lenses, with a work chamber (11), which is accessible from outside via a selectably closable opening (16) and in which a workpiece mount (12) and at least one tool mount (13, 13') are opposite one another and movable relative to one another so that a processing region (14, 14') of a tool (15, 15') held at the tool mount (13, 13') can be brought into processing engagement with a workpiece held at the workpiece mount (12) and in processing engagement can be guided over the workpiece, **characterized in that** a sensor equipment (17) with at least one contactlessly operating sensor arrangement (18, 18') for recognition of wear at the tool (15, 15') is provided and is movable outside the work chamber (11) from a protected rest position to a detecting position and conversely, wherein in the detecting position of the sensor arrangement (18, 18') the sensor equipment (17) is adapted to detect via the opened opening (16) of the work chamber (11) at the processing region (14, 14') of the tool (15, 15') held at the tool mount (13, 13') an impermissible deviation of the processing region (14, 14') from a desired geometry.

2. Device (10) for processing optical workpieces according to claim 1, **characterized in that** the at least one sensor arrangement (18, 18') is mounted on a sensor holder (59) of the sensor equipment (17), the holder being linearly displaceable with respect to a base frame (57), which is mounted in fixed position, of the sensor equipment (17) so as to move the sensor arrangement (18, 18') from the protected rest position to the detecting position and conversely.

3. Device (10) for processing optical workpieces according to claim 2, **characterized in that** the sensor holder (59) is guided relative to the base frame (57) by means of a linear guide (60) which comprises a guide carriage (61) attached to the base frame (57) and a guide rail (62) mounted on the sensor holder (59).

4. Device (10) for processing optical workpieces according to claim 2 or 3, **characterized in that** the sensor equipment (17) comprises a linear drive (65) drivingly connected with the sensor holder (59).

5. Device (10) for processing optical workpieces according to claim 4, **characterized in that** the linear drive is a pneumatic cylinder (65) mounted to be effective in terms of actuation between the base frame (57) and the sensor holder (59).

6. Device (10) according to any one of claims 2 to 5, **characterized in that** a shock absorber (72) is arranged between the base frame (57) and the sensor holder (59), which shock absorber limits the linear displacement of the sensor holder (59) relative to the base frame (57) and thus defines the detecting position of the at least one sensor arrangement (18, 18').

7. Device (10) for processing optical workpieces according to any one of the preceding claims, **characterized in that** the at least one sensor arrangement (18, 18') in the protected rest position is covered by means of a cover (83) of the sensor equipment (17) so as to be sealed relative to the environment.

8. Device (10) for processing optical workpieces according to claim 7, **characterized in that** the cover (83) of the sensor equipment (17) comprises a flap (84) which is mounted at an edge (85) so that the flap (84) is pivotable from a closed setting associated with the rest position of the at least one sensor arrangement (18, 18') to an open setting associated with the detecting position of the at least one sensor arrangement (18, 18') and conversely.

9. Device (10) for processing optical workpieces according to claim 8, **characterized in that** the flap (84) in its closed setting co-operates with a seal (82), which is mounted in fixed position and encircles the sensor equipment (17) so as to seal the sensor equipment (17) relative to the environment.

10. Device (10) for processing optical workpieces according to at least claims 2 and 8, **characterized in that** the flap (84) is pivotable relative to the base frame (57) in dependence on a displacement of the sensor holder (59).

11. Device (10) for processing optical workpieces according to claim 10, **characterized in that** the sensor holder (59) engages the flap (84) by way of a rotatably mounted roller body (88).

12. Device (10) for processing optical workpieces according to any one of claims 8 to 11, **characterized in that** the flap (84) is spring-biased into the closed setting.

13. Device (10) for processing optical workpieces according to any one of claims 8 to 12, **characterized in that** the flap (84) co-operates with a proximity switch (94) which is mounted in fixed position and which is adapted to detect the closed setting of the flap (84) and thereby the rest position of the at least one sensor arrangement (18, 18').

14. Device (10) for processing optical workpieces according to any one of the preceding claims, **characterized by** a supporting frame (22) surrounding the work chamber (11), wherein the sensor equipment (17) is mounted by way of a holding frame (58) directly on the frame (22) of the device (10).

15. Device (10) for processing optical workpieces according to any one of the preceding claims, **characterized by** a further tool mount (13') which is opposite the workpiece mount (12) and which is movable in the work chamber (11) relative to the workpiece mount (12) so that a processing region (14') of a further tool (15') held at the further tool mount (13') can be brought into processing engagement with a workpiece held at the workpiece mount (12) and in processing engagement can be guided over the workpiece, wherein the further tool mount (13') with the further tool (15') held thereat is movable in parallel arrangement to and in common with the first-mentioned tool mount (13) with respect to the sensor equipment (17) into a checking position in which by means of the sensor equipment (17) the recognition of wear can be carried out via the opened opening (16) of the work chamber (11) and wherein the sensor equipment (17) comprises two sensor arrangements (18, 18') each associated with a respective tool mount (13, 13').

16. Device (10) for processing optical workpieces according to claim 15, **characterized in that** the two sensor arrangements (18, 18') are of identical construction.

17. Device (10) for processing optical workpieces according to at least claims 2 and 15, **characterized in that** the sensor holder (59) of the sensor equipment (17) has at a holder head (98) two mounting surfaces (99, 99') each for a respective one of the sensor arrangements (18, 18'), which mounting surfaces include in wedge-shaped arrangement an acute angle (α) with one another and have a transverse offset (Q) from one another with respect to a longitudinal axis of the sensor holder (59), the mounting surfaces being provided with oblong holes (100, 100') which permit mounting of the sensor arrangements (18, 18') turned relative to one another on the mounting surfaces (99, 99').

18. Device (10) for processing optical workpieces according to any one of the preceding claims, **characterized in that** the at least one sensor arrangement or each of the sensor arrangements (18, 18') comprises a laser (95, 95') and a light-section sensor (96, 96'), wherein by means of the light-section sensor (96, 96') a laser line (97, 97') able to be imaged by the laser (95, 95') on the processing region (14, 14') of the associated tool (15, 15') is detectable by way of a triangulation method.

## Revendications

1. Dispositif (10) destiné à façonner des pièces à usiner optiques, en particulier des verres de lunettes, avec un espace de travail (11) accessible depuis l'extérieur par une ouverture (16) pouvant être sélectivement fermée, dans lequel espace de travail un logement de pièce à usiner (12) et au moins un logement d'outil (13, 13') sont opposés l'un à l'autre et peuvent être déplacés l'un par rapport à l'autre, de sorte qu'une zone de façonnage (14, 14') d'un outil (15, 15') maintenu contre le logement d'outil (13, 13') puisse être amené en engagement de façonnage avec une pièce à usiner maintenue contre le logement de pièce à usiner (12) et guidé par-dessus la pièce à usiner pendant l'engagement de façonnage, **caractérisé en ce qu'**un équipement de capteur (17) avec au moins un agencement de capteur (18, 18') travaillant sans contact est prévu pour la détection d'usure sur l'outil (15, 15'), lequel agencement de capteur peut être déplacé, à l'extérieur de l'espace de travail (11), d'une position de repos protégée vers une position de saisie et inversement, dans lequel l'équipement de capteur (17) est ajusté, dans la position de saisie de l'agencement de capteur (18, 18'), pour saisir, à travers l'ouverture (16) de l'espace de travail (11) et au niveau de la zone de façonnage (14, 14') de l'outil (15, 15') maintenu contre le logement d'outil (13, 13'), une déviation non autorisée de la zone de façonnage (14, 14') par rapport à une géométrie de consigne.

2. Dispositif (10) destiné à façonner des pièces à usiner optiques selon la revendication 1, **caractérisé en ce que** le au moins un agencement de capteur (18, 18') est monté contre un support de capteur (59) de l'équipement de capteur (17), lequel support de capteur peut être décalé de façon linéaire par rapport à un cadre de base (57) posé de façon fixe de l'équipement de capteur (17) pour déplacer l'agencement de capteur (18, 18') de la position de repos protégée vers la position de saisie et inversement.

3. Dispositif (10) destiné à façonner des pièces à usiner optiques selon la revendication 2, **caractérisé en ce que** le support de capteur (59) est guidé par rapport au cadre de base (57) au moyen d'un guidage linéaire (60) qui comprend un chariot de guidage (61) fixé contre le cadre de base (57) et un rail de guidage (62) monté contre le support de capteur (59).

4. Dispositif (10) destiné à façonner des pièces à usiner optiques selon la revendication 2 ou 3, **caractérisé en ce que** l'équipement de capteur (17) présente un entraînement linéaire (65) relié par entraînement au support de capteur (59).

5. Dispositif (10) destiné à façonner des pièces à usiner optiques selon la revendication 4, **caractérisé en ce que** l'entraînement linéaire est un vérin pneumatique (65) qui est monté de façon opérationnelle en actionnement entre le cadre de base (57) et le support de capteur (59).

6. Dispositif (10) selon l'une des revendications 2 à 5, **caractérisé en ce qu'**entre le cadre de base (57) et le support de capteur (59) est agencé un amortisseur (72) qui délimite le décalage linéaire du support de capteur (59) par rapport au cadre de base (57) et définit ainsi la position de saisie du au moins un agencement de capteur (18, 18').

7. Dispositif (10) destiné à façonner des pièces à usiner optiques selon l'une des revendications précédentes, **caractérisé en ce que** dans la position de repos protégée le au moins un agencement de capteur (18, 18') est recouvert de façon étanche par rapport à l'environnement au moyen d'un couvercle (83) de l'équipement de capteur (17).

8. Dispositif (10) destiné à façonner des pièces à usiner optiques selon la revendication 7, **caractérisé en ce que** le couvercle (83) de l'équipement de capteur (17) comprend un clapet (84) qui est placé contre un bord (85) de sorte que le clapet (84) puisse être pivoté d'une situation de fermeture attribuée à la position de repos du au moins un agencement de capteur (18, 18') vers une situation d'ouverture attribuée à la position de saisie du au moins un agencement de capteur (18, 18') et inversement.

9. Dispositif (10) destiné à façonner des pièces à usiner optiques selon la revendication 8, **caractérisé en ce que**, dans sa situation de fermeture, le clapet (84) coopère avec un joint (82) posé de façon fixe et périphérique autour de l'équipement de capteur (17) pour étanchéifier l'équipement de capteur (17) par rapport à l'environnement.

10. Dispositif (10) destiné à façonner des pièces à usiner optiques selon au moins les revendications 2 et 8, **caractérisé en ce que** le clapet (84) peut être pivoté par rapport au cadre de base (57) en fonction d'un décalage du support de capteur (59).

11. Dispositif (10) destiné à façonner des pièces à usiner optiques selon la revendication 10, **caractérisé en ce que** le support de capteur (59) vient en prise contre le clapet (84) via un corps de roulement (88) placé en rotation.

12. Dispositif (10) destiné à façonner des pièces à usiner optiques selon l'une des revendications 8 à 11, **caractérisé en ce que** dans la situation de fermeture le clapet (84) est précontraint par un ressort.

13. Dispositif (10) destiné à façonner des pièces à usiner optiques selon l'une des revendications 8 à 12, **caractérisé en ce que** le clapet (84) coopère avec un interrupteur de proximité (94) monté de façon fixe, qui est ajusté pour détecter la situation de fermeture du clapet (84) et ainsi la position de repos du au moins un agencement de capteur (18, 18').

14. Dispositif (10) destiné à façonner des pièces à usiner optiques selon l'une des revendications précédentes, **caractérisé par** un cadre (22) porteur qui entoure l'espace de travail (11), dans lequel l'équipement de capteur (17) est monté directement contre le cadre (22) du dispositif (10) via un cadre de maintien (58).

15. Dispositif (10) destiné à façonner des pièces à usiner optiques selon l'une des revendications précédentes, **caractérisé par** un autre logement d'outil (13') opposé au logement de pièce à usiner (12), lequel autre logement d'outil peut être déplacé dans l'espace de travail (11) par rapport au logement de pièce à usiner (12), de sorte qu'une zone de façonnage (14') d'un autre outil (15') maintenu contre l'autre logement d'outil (13') puisse être amenée en engagement de façonnage avec une pièce à usiner maintenue contre le logement de pièce à usiner (12) et guidée par-dessus la pièce à usiner pendant l'engagement de façonnage, dans lequel l'autre logement d'outil (13') avec l'autre outil (15') maintenu contre celui-ci peut être déplacé par rapport à l'équipement de capteur (17), dans un agencement parallèle et commun au premier logement d'outil (13), dans une position d'essai dans laquelle la détection d'usure peut être effectuée à travers l'ouverture (16) ouverte de l'espace de travail (11) au moyen de l'équipement de capteur (17), et dans lequel l'équipement de capteur (17) comprend deux agencements de capteur (18, 18') qui sont respectivement attribués à un logement d'outil (13, 13').

16. Dispositif (10) destiné à façonner des pièces à usiner optiques selon la revendication 15, **caractérisé en ce que** les deux agencements de capteur (18, 18') sont conçus à l'identique.

17. Dispositif (10) destiné à façonner des pièces à usiner optiques selon au moins les revendications 2 et 15, **caractérisé en ce que** le support de capteur (59) de l'équipement de capteur (17) présente, contre une tête de maintien (98), deux surfaces de montage (99, 99') pour respectivement un des agencements de capteur (18, 18'), qui dans un agencement cunéiforme forment ensemble un angle (α) aigu, ont un déport transversal (Q) l'une par rapport à l'autre par rapport à un axe longitudinal du support de capteur (59) et sont dotées de trous oblongs (100, 100') qui permettent un montage à l'envers des agencements de capteur (18, 18') l'un par rapport à l'autre sur les surfaces de montage (99, 99').

18. Dispositif (10) destiné à façonner des pièces à usiner optiques selon l'une des revendications précédentes, **caractérisé en ce que** le au moins un agencement de capteur ou chacun des agencements de capteur (18, 18') comprend un laser (95, 95') et un capteur à coupe optique (96, 96'), dans lequel un laser linéaire (97, 97') susceptible d'être reproduit par le laser (95, 95') sur la zone de façonnage (14, 14') de l'outil (15, 15') attribué peut être détecté par un procédé de triangulation au moyen du capteur à coupe optique (96, 96').
